# NEUE EUROPÄISCHE PATENTSCHRIFT

(11) **EP 3 498 548 B2**
(45) Veröffentlichungstag und Bekanntmachung des Hinweises auf die Entscheidung über den Einspruch: **29.04.2026**
(45) Hinweis auf die Patenterteilung: 30.09.2020
(21) Anmeldenummer: 18212691.2
(22) Anmeldetag: 14.12.2018
(51) Int. Cl.: B60S 9/12

(54) **HUBSTÜTZENANORDNUNG MIT EINER SICHERUNGSEINRICHTUNG**
LIFTING SUPPORT ASSEMBLY WITH A SECURING DEVICE
AGENCEMENT DE LEVAGE DOTÉ D'UN DISPOSITIF DE SÉCURITÉ

(30) Priorität: 15.12.2017 DE 102017130139
(43) Veröffentlichungstag der Anmeldung: 19.06.2019
(73) Patentinhaber: Alois Kober GmbH, 89359 Kötz (DE)
(72) Erfinder: CZESCHNER, Daniel Andre, 87727 Babenhausen (DE); ECKLE, Volker, 89183 Holzkirch (DE); LUKAS, Maximilian, 87757 Kirchheim (DE); HUPFER, Christian, 86476 Neuburg (DE); SCHMID, Manfred, 89257 Illertissen (DE); UNSELD, Wolfgang, 89233 Neu-Ulm/Steinheim (DE)
(74) Vertreter: Ernicke, Moritz

(56) Entgegenhaltungen:
- DE-U1- 202016 107 009
- US-A1- 2015 054 271

## Beschreibung

Die Erfindung betrifft eine Hubstützenanordnung mit einer Sicherungseinrichtung mit den Merkmalen im Vorrichtungshauptanspruch.

Die DE 20 2016 107 009 U1 wird als nächstliegender Stand der Technik gegenüber dem Gegenstand der unabhängigen Ansprüche angesehen.

Aus der Praxis sind zentrale und dezentrale Hubstützenanordnungen für ein motorisiertes mit mehreren Hubstützen und einer Steuereinrichtung bekannt.

Die US 2011/0024706 A1 zeigt beispielhaft eine dezentrale hydraulische Hubstützenanordnung für den Einsatz bei schwergewichtigen und großen Wohnmobilen im LKW-Format.

Es ist Aufgabe der vorliegenden Erfindung, eine verbesserte Sicherungstechnik für eine Hubstützenanordnung aufzuzeigen.

Die Erfindung löst diese Aufgabe mit den Merkmalen im Vorrichtungshauptanspruch.

Die beanspruchte Sicherungstechnik, d.h. die Sicherungseinrichtung sowie eine damit ausgerüstete und betriebene Hubstützenanordnung, haben verschiedene Vorteile.

Durch die Sicherungstechnik, insbesondere die Detektionstechnik, d.h. eine Detektionseinrichtung werden aktuelle Gewichtsmerkmale des Straßenfahrzeugs erfasst. Die Gewichtsmerkmale sind die vorderen und hinteren Achslasten und können z.B. auch zusätzlich das Fahrzeuggesamtgewicht, die aktuelle Lage des Fahrzeugschwerpunkts etc. sein. Der Bediener kann sich bei der Detektion der Gewichtsmerkmale innerhalb oder außerhalb des Straßenfahrzeugs befinden. Die Detektionseinrichtung kann eine Anzeige aufweisen oder mit einer Anzeige verbunden sein.

Das Detektionsergebnis kann einem Bediener in geeigneter Weise angezeigt werden, z.B. durch eine optische und/oder akustische Anzeige. Diese kann z.B. ein Anzeigeelement an einem Bediengerät und/oder an einer Armaturentafel des Straßenfahrzeugs oder dgl. sein. Alternativ oder zusätzlich ist eine Signalverbindung mit der Fahrzeugsteuerung möglich. Diese kann im Gefahrenfall eine Sicherungsmaßnahme ergreifen. Sie kann z.B. ein Starten des Straßenfahrzeugs verhindern oder die Fahrgeschwindigkeit begrenzen oder dgl.

Die Detektion kann in beliebiger Fahrzeuglage und -neigung durchgeführt werden. Die Detektionstechnik kann die aktuelle Fahrzeuglage, z.B. eine Horizontal- oder Schräglage, bei der Detektion berücksichtigen. Hierbei kann auf einen eigenen Neigungssensor der Detektionseinrichtung oder auf eine ggf. vorhandene Nivelliereinrichtung der Hubstützenanordnung zurückgegriffen werden.

Die Detektion kann auf Bedienerbefehl automatisch durchgeführt werden. Hierfür können die aktuelle Belastung der Hubstützen aufnehmende Sensoren sowie ggf. ein Neigungssensor abgefragt und deren Meldungen ausgewertet werden. Andere Parameter, wie Stützen- und Achsabstände, ein evtl. Korrekturfaktor oder dgl. sowie eine Software, insbesondere ein Berechnungsprogramm, können vorab eingegeben und gespeichert sein.

Die Detektion kann mittels eines Bediengeräts und eines Programms, insbesondere einer App, automatisch und ggf. mit Bedienerrückfragen durchgeführt werden. Die Hubstützen können dabei in abgestimmter Weise mit Ausheben der Achsanordnungen bis in stabile Positionen ausgefahren werden. Etwaige Verspannungen können durch ein kurzes Einfahren der Hubstützen gelöst werden. Ein Nivellieren der Fahrzeuglage nach einem Vorgabewert kann zu Beginn der Detektion oder zwischen Einnahme der stabilen Position und dem kurzen Einfahren der Hubstützen erfolgen. Wenn nach diesen Bewegungsabläufen der Hubstützen das Fahrzeug stabil auf den Hubstützen steht, können die Druck- oder Kraftmessung und die Auswertung der Messwerte durchgeführt werden.

Durch die Detektion der Achslasten und-ggf. des Gesamtgewichts und ggf. des Fahrzeugschwerpunkts können Sicherheitsprobleme, insbesondere Gewichts- und Ladeprobleme, erfasst und vom Bediener gezielt behoben werden. Ein Sicherheitsproblem kann ein Überschreiten einer zulässigen Achslast und ggf. ein Überschreiten des zulässigen Gesamtgewichts und ggf.
eine ungünstige Gewichts- oder Ladungsverteilung betreffen. Ein Sicherheitsproblem kann auch eine aus Gewichts- oder Ladeproblemen resultierende Beeinträchtigung der Fahrstabilität und Fahrsicherheit des Straßenfahrzeugs betreffen.

Die Detektionstechnik kann ein integraler oder nachrüstbarer Bestandteil einer dezentralen hydraulischen Hubstützenanordnung sein. Sie lässt sich auch mit anderen, z.B. zentralen hydraulischen Hubstützenanordnungen einsetzen.

Die Detektionstechnik kann hardwaremäßig und/oder softwaremäßig ausgebildet sein. Sie kann auf ggf. vorhandene Bestandteile der Hubstützenanordnung, insbesondere deren Steuereinrichtung, Sensoren, Signalverbindungen, Nivelliereinrichtung, Bediengerät, Stromversorgung etc. zurückgreifen. Die Sensoren sind lastaufnehmende Drucksensoren im Hydraulikkreis von hydraulischen Hubstützen, und ggf. ein Neigungssensor einer Nivelliereinrichtung. Die Detektionstechnik kann dabei z.B. aus einem Softwaremodul bestehen, das in die Steuereinrichtung implementiert wird.

Die Detektionseinrichtung kann auch eine eigenständige Einheit sein, die nachträglich an einer Hubstützenanordnung angebaut oder dieser zugeordnet wird. Die eigenständige Einheit kann auch die erwähnten Sensoren nebst Kommunikationsmitteln, die Anzeige etc. beinhalten.

Die Sicherungstechnik kann auch eine Umgebungserfassungstechnik, d.h. eine Umgebungserfassungseinrichtung und ein Verfahren zur Umgebungserfassung, aufweisen. Sie kann signaltechnisch mit der Steuereinrichtung der Hubstützenanordnung verbunden sein.

Die Umgebungserfassungseinrichtung kann eine Beleuchtungseinrichtung und/oder eine bevorzugt optische Erfassungseinrichtung nebst zugehörigen Verfahren, beinhalten. Die optische Erfassungseinrichtung kann eine oder mehrere Kameras aufweisen, die bevorzugt jeweils eine Hubstütze zugeordnet sind. Hierdurch können Umgebung und Funktion der Hubstützen erfasst und ggf. einem Bediener angezeigt werden. Der Bediener kann sich dabei innerhalb oder außerhalb des Straßenfahrzeugs befinden.

Mit der Beleuchtungseinrichtung kann der Standbereich der Hubstütze(n) am Untergrund ausgeleuchtet werden. Dies ist auch für die optische Erfassungseinrichtung, z.B. deren elektronische Kamera(s), Visionsystem(e) oder dgl., von Vorteil. Diese kann auch bei schlechten Sichtverhältnissen, insbesondere bei Nacht funktionieren.

Der Bediener kann bei der Betätigung der Hubstütze(n) den Standbereich, das untere Stützenende sowie ggf. andere Elemente im Funktionsumfeld der Hubstütze(n) mittels einer geeigneten Anzeige sehen. Der Bediener kann insbesondere die nicht in seinem eigenen Sichtfeld befindliche(n) Hubstütze(n) und deren Umgebung beobachten. Er kann dadurch eine sichere Fernsteuerung der Hubstützenanordnung bzw. der Hubstützen durchführen. Die aufgenommenen Bilder oder ein Video können auch gespeichert werden.

Die Beleuchtungseinrichtung kann alternativ oder zusätzlich eine oder mehrere weitere Funktionen haben. Sie kann als optisches Warnsignal, z.B. als Blinklicht oder farbiges Warnlicht, bei der Hubstützenbewegung fungieren. Sie kann auch als Bildwerfer oder Projektor dienen, wobei sie z.B. eine Logo auf den stützennahen Untergrund oder an eine andere Stelle projiziert. Die Beleuchtungseinrichtung kann ferner bei einem Funktionstest der Hubstütze oder Hubstützenanordnung das Testergebnis signalisieren. Sie kann auch anderen Zwecken dienen.

Die Beleuchtungseinrichtung kann der Hubstützenanordnung oder den einzelnen Hubstütze(n) zugeordnet sein. Sie kann ein Leuchtmittel für jede Hubstütze aufweisen und kann Licht nach einer oder mehreren Richtungen, insbesondere nach unten, emittieren. Sie kann auch eine Signalverbindung zwischen den Leuchtmitteln und einer Steuereinrichtung beinhalten. Die Leuchtmittel können jeweils ein oder mehrere Leuchtelemente, insbesondere LED's, beinhalten. Diese können jeweils an geeigneter Stelle an oder in der Umgebung einer Hubstütze montiert sein.

Die Kamera ist jeweils vorzugsweise als digitale elektronische Kamera ausgebildet. Sie kann einzelne Bilder und/oder einen Film aufnehmen. Sie kann auch als Messkamera ausgebildet sein. Die Kamera ist jeweils bevorzugt einer Hubstütze zugeordnet. Sie hat bevorzugsweise eine Blickrichtung nach unten. Hierdurch kann z.B. ein ungünstiger oder schräger Untergrund, und eine Schräglage des ausgefahrenen Hubstützenendes, insbesondere eines Stütztellers, erfasst und bedarfsweise vermessen werden. Die Kamera kann mit einer Auswerteeinrichtung, insbesondere einer Bildauswertung, versehen oder gekoppelt sein. Sie kann ferner mit einer Anzeige für die aufgenommenen Bilder oder Videos, insbesondere einem Monitor gekoppelt sein.

Die optische Erfassungseinrichtung kann auch zu anderen zwecken, z.B. zur Umfeld- oder Sicherheitsüberwachung des Straßenfahrzeugs, eingesetzt werden. Die Kameras können dazu eine weitere, insbesondere seitliche, Blickrichtung oder ein kuppelartiges oder halbkugelförmiges Blickfeld haben. Dies kann z.B. durch eine entsprechende Weitwinkel-Optik, eine beweglichen Spiegel oder dgl. bewirkt werden. Die aufgenommen Bilder können auch mittels einer Bildauswertung und -steuerung optisch entzerrt und mit ggf. wählbarem Ausschnitt angezeigt werden.

Die Umgebungserfassungstechnik kann ein integraler oder nachrüstbarer Bestandteil einer dezentralen hydraulischen Hubstützenanordnung sein. Sie lässt sich auch mit anderen, z.B. zentralen hydraulischen oder sonstigen Hubstützenanordnungen und mit anderen Hubstützen, insbesondere mechanischen bzw. elektromotorischen Hubstützen, einsetzen.

Die Umgebungserfassungstechnik kann auf ggf. vorhandene Bestandteile der Hubstützenanordnung, insbesondere deren Steuereinrichtung, Sensoren, Nivelliereinrichtung, Bediengerät, Stromversorgung etc. zurückgreifen.

Die Umgebungserfassungstechnik kann auch eine eigenständige Einheit sein, die nachträglich an einer Hubstützenanordnung angebaut oder dieser zugeordnet wird. Die eigenständige Einheit kann auch die erwähnte Anzeige etc. beinhalten.

Mit einer Fahrkontrolle für die Hubstützenbewegungen, können Fehlfunktionen der Hubstützenanordnung auf Grund von Fehlbedienung und/oder fehlerhafter Steuertechnik vermieden werden. Insbesondere kann verhindert werden, dass die Hubstützenanordnung unbeabsichtigt in Gang gesetzt wird. Das in Gang setzen der Hubstützenanordnung und ihrer Hubstützen ist nur durch eine absichtliche Betätigung einer hierfür vorgesehenen Betätigungseinrichtung möglich. Ein etwaiger Defekt in der Hardware, insbesondere in der steuerungstechnischen Hardware, der Hubstützenanordnung führt nicht zu einer Gefährdungssituation.

Die Fahrkontrolle der Hubstütze(n) kann als Steuermodul ausgebildet sein. Sie kann der Steuereinrichtung der Hubstützenanordnung als Software- und/oder Hardwaremodul zugeordnet werden. Dadurch ist eine Implementierung bei Erstausrüstung oder auch eine Nachrüstung oder Umrüstung von Hubstützenanordnungen mit der Sicherheitstechnik möglich. Die Hubstützenanordnung kann von der Sicherungseinrichtung direkt oder mittelbar über die Steuereinrichtung angesteuert werden.

Besondere Vorteile bestehen bei einer dezentralen hydraulischen Hubstützenanordnung mit autonomen hydraulischen Hubstützen. Die Hubstützen können starr oder mittels einer Stelleinrichtung beweglich, z.B. schwenkbar am Fahrzeug gelagert werden.

Die Fahrkontrolle, kann mittels eines Weckmoduls bedarfsweise aufgeweckt werden, insbesondere durch ein Signal eines Gebers für ein Startsignal des Straßenfahrzeugs und/oder durch ein Bediensignal eines Bediengeräts. Hierbei können auch weitere Komponenten, insbesondere die Steuereinrichtung, aufgeweckt werden. Das Startsignal kann z.B. ein Zündungssignal oder ein Bussignal von einem Fahrzeugbus sein. Der Standby- oder Schlafmodus spart Energie. Andererseits kann über das Gebersignal eine permanente Sicherheitsüberwachung des Straßenfahrzeugs erfolgen. Die Sicherungseinrichtung wird erst bei einer Gefährdungssituation oder auf das besagte Bediensignal hin aufgeweckt.

Die Fahrkontrolle, kann unterschiedlichen Sicherheitserfordernissen gerecht werden.

Zum einen kann der Fall eintreten, dass bei ausgefahrenen Hubstützen das Straßenfahrzeug durch Einschalten der Zündung gestartet wird und dann eventuell losfährt. Eine solche gefahrenträchtige Situation kann über ein Startsignal des besagten Gebers detektiert werden. Dies kann z.B. ein Zündsignal und/oder ein Bussignal sein, wobei der Geber z.B. eine Klemme oder die Fahrzeugsteuerung sein kann. Die Sicherungstechnik überprüft dann mittels eines Prüfmoduls die aktuelle Hubstützenstellung. Wenn die Hubstützen ausgefahren sind, wird von der Sicherungstechnik ein Warnsignal emittiert, dass den Fahrer vor einem Wegfahren warnt.

Die Sicherungseinrichtung kann dabei die Hubstützen in der aktuellen Stellung belassen. Vorzugsweise wird ein automatisches Einfahren der Hubstützen und ein damit einhergehendes Absenken des Fahrzeugs verhindert. Dies dient unter anderem der Unfallsicherheit, falls sich gerade eine Person, ein Tier oder auch ein Gegenstand unter dem Fahrzeug befindet.

Andererseits muss das Startsignal noch nicht unbedingt bedeuten, dass der Fahrzeugbediener tatsächlich losfahren will. Er kann die Zündung und damit das Bordnetz sowie ggf. den Fahrzeugmotor auch aus anderen Gründen einschalten, z.B. um Radio zu hören, ein Navigationsgerät zu bedienen oder eine Stromversorgung für ein Gerät oder Aggregat im Fahrzeugaufbau oder extern zu aktivieren.

Die Erkennungssicherheit für die Bedeutung des empfangenen Startsignals kann durch eine Prüfeinrichtung erhöht werden, die den aktuellen Betriebszustand und die Wegfahrbereitschaft des Straßenfahrzeugs detektiert und bewertet. Hierbei können z.B. die Handbremsenstellung, eine Sitzbelegung, das Einlegen eines Fahrgangs im Fahrzeuggetriebe oder dgl. sensorisch erfasst und ausgewertet werden. Hieraus kann rückgeschlossen werden, ob tatsächlich auf das Startsignal hin ein Losfahren wahrscheinlich ist. Das Gebersignal kann von der Sicherungstechnik entsprechend bewertet werden. Die Sicherungstechnik kann auf Grund dieser Bewertung entscheiden, ob sie bei einem empfangenen Gebersignal die Sicherungsfunktion und die Emission des Warnsignals auslöst oder nicht.

Das Warnsignal kann auf beliebig geeignete Weise im oder am Straßenfahrzeug emittiert werden. Bei einer signaltechnischen Verbindung mit der Fahrzeugsteuerung kann eine Signalisierung auch über bordeigene Mittel, z.B. ein Display im Armaturenbrett, erfolgen.

Ein anderer Sicherungsaspekt betrifft die Ausfallsicherheit der Hardware. Die beanspruchte Sicherungstechnik sieht jeweils mehrere, insbesondere zwei, parallele Sicherungskreise für das Ansteuern der Hubstützen vor. Hierbei werden über einen eigenen Controller jeweils zum einen der Antrieb und zum anderen eine Steueranordnung der Hubstütze getrennt angesteuert. Die Controller können eigenständige Steuerhardware oder eigenständige Funktionen mit Implementierung in einen gemeinsamen Microcontroller oder Prozessor sein. Die Controller und ihre elektronischen Bauteile werden jeweils von einer Controllerüberwachung permanent auf Ausfall überwacht. Eine Ansteuerung und Betätigung der Hubstützen erfolgt nur bei einem positiven Überwachungsergebnis.

Ein anderer Sicherungsaspekt betrifft die Verlässlichkeit des Bedienungssignals. Dies kann mit einem Plausibilitätsmodul überprüft werden. Dieses kann zwischen einem beabsichtigten Bedienungssignal und einem versehentlichen Signal bzw. einer Fehlbedienung unterscheiden. Das Bediengerät kann mit seinen Bedienelementen entsprechend ausgestaltet sein, um auf der Seite der Befehlsgenerierung zusätzliche Sicherheit zu bieten. Ein Eingabebefehl wird z.B. erst nach einem längeren und/oder kräftigeren Betätigen eines Bedienelements als solcher erkannt und verarbeitet.

Eine sichere Bedienung der Hubstützenanordnung ist möglich, wenn ein Startsignal des Gebers ausbleibt oder negativ bzw. als sicherheitstechnisch irrelevant bewertet wird, ein beabsichtigtes Bediensignal detektiert wird und die Sicherungskreise mit den Controllern für die Ansteuerung der Hubstützen intakt sind. Dies wird als sicherer Betriebsfall erkannt, so dass der Bediener die Hubstützenanordnung nach Wunsch und uneingeschränkt bedienen kann.

Ein weiterer Sicherungsaspekt betrifft die Nivellierung der Hubstützenanordnung und des Straßenfahrzeugs. Wenn die Nivellierung beendet ist und die gewünschte Fahrzeuglage, insbesondere horizontale Lage oder Fahrzeugneigung, eingenommen ist, wird von der Sicherungstechnik überprüft, ob alle Hubstützen Bodenkontakt haben und belastet sind. Hierbei können etwaige Fehlstellung mit z.B. drei tragenden Hubstützen und einer schwebenden Hubstütze erkannt werden. Die Sicherungstechnik bringt im Bedarfsfall die unzureichend belastete Hubstütze in eine Ausfahrstellung, in der sie Bodenkontakt hat und eine Mindestbelastung wie die anderen Hubstützen aufnimmt. Die ausgefahrenen Hubstützen können hierfür auf Erreichen eines vorgegebenen Mindest- oder Schwellwerts oder eines gleichen Endwerts der Kraft- oder Druckbelastung durch entsprechend gesteuertes bzw. geregeltes Ausfahren eingestellt werden. Die Sicherungstechnik kann hierfür ein Nachsetzmodul aufweisen.

Durch das Nachsetzen wird eine hohe Standsicherheit des nivellierten Fahrzeugs erreicht, die auch etwaigen Belastungsänderungen, z.B. Gewichtsverlagerungen im Fahrzeug standhält. Eine dezentrale, insbesondere hydraulische, Hubstützenanordnung mit autonomen Hubstützen hat den besonderen Vorteil eines feinfühligen Ansprechens und eines ruckelfreien Ausfahrens der Hubstützen.

Die beanspruchte Detektionstechnik, die Umgebungserfassungstechnik und die Fahrkontrolle können in Kombination zusammen genutzt werden.

Die bevorzugte Fahrgestell- und Hubstützentechnik hat verschiedene Vorteile. Die hydraulischen Hubstützen können das Fahrgestell und das Straßenfahrzeug besser und sicherer abstützen. Die Hubstützen lassen sich insbesondere mit Leichtbau-Fahrgestellen kombinieren. Diese weisen kleinformatige und dünnwandige Fahrgestellteile auf, welche für die Aufnahme von Hubstützen und Stützlasten nicht überall geeignet und ausgebildet sind.

Die hydraulischen Hubstützen und die dezentrale hydraulische Hubstützenanordnung ermöglichen eine raumoptimierte Unterbringung am Fahrgestell des Straßenfahrzeugs. Hierbei kann ein Anbau vor allem an den Längsträgern eines Fahrgestells erfolgen, wobei der Innenraum im Fahrgestell, insbesondere in der bevorzugten Ausbildung als Leiterrahmen, für andere Zwecke frei bleiben kann. Der Aufbau- bzw. Fahrzeughersteller kann dadurch auch den im und am Fahrgestell befindlichen Raum für seine Zwecke optimal nutzen und wird hierbei durch die hydraulischen Hubstützen bzw. die dezentrale hydraulische Hubstützenanordnung im Wesentlichen nicht eingeschränkt.

Der hydraulische Aktor und die hydraulische Versorgungseinheit einer hydraulischen Hubstütze bzw. ihrer Stützeinheit sind bevorzugt als separate und mit gegenseitiger Distanz am Straßenfahrzeug eigenständig montierbare Einheiten ausgestaltet, die durch schlauchförmige hydraulische Leitungen miteinander verbunden sind.

Günstig ist die Ausbildung des Aktors als mehrstufig teleskopierbarer und beidseitig beaufschlagbarer hydraulischer Zylinder mit beweglicher Kolbenstange und beweglichem Innenrohr sowie hierzu relativ ortsfestem Außenrohr. Ein solcher, z.B. zweistufiger, hydraulischer Zylinder kann gesteuert ausgefahren und eingefahren werden. Hierbei kann die bewegliche Kolbenstange ein- und ausgefahren werden. Sie kann dabei an ihrem freien Ende ein Stützteller aufweisen. Der hydraulische Aktor kann in verschiedenen Ausfahrstellungen auf einfache und sichere Weise blockiert werden, z.B. durch Rückschlagventile. Der hydraulische Aktor kann andererseits auch aktiv gesteuert wieder eingefahren werden. Hierfür ist eine beidseitig fördernde Pumpenanordnung von Vorteil. Hierfür kann eine beidseitig fördernde Pumpe eingesetzt werden. Alternativ ist eine einseitig fördernde Pumpe mit fester Drehrichtung und mit einem Umschaltventil möglich.

Ferner ist vorgesehen, dass die hydraulische Hubstütze, insbesondere ihr hydraulischer Aktor, starr und relativ ortsfest am Straßenfahrzeug, insbesondere an dessen Fahrgestell, montiert und fixiert werden kann. Die bei vorbekannten Hubstützen übliche zusätzliche Schwenklagerung des Aktors kann entfallen.

Beispielsweise kann mittels einer absenkbaren hinteren Achsanordnung einerseits das Fahrgestell schräg gestellt werden und darüber hinaus eine zusätzliche Schrägstellung durch die dezentrale hydraulische Hubstützenanordnung erreicht werden. Dies ist z.B. günstig, um den Auffahrwinkel für heckseitige Auffahrrampen zu optimieren und Knickstellen am Übergang zwischen Auffahrrampe und Fahrgestell möglichst zu vermeiden oder zu minimieren. Die beanspruchte hydraulische Hubstützenanordnung kann dabei das schräg gestellte Fahrgestell optimal abstützen und stabilisieren sowie die abgesenkte Achsanordnung entlasten.

Die dezentrale hydraulische Hubstützenanordnung kann weitgehend vereinheitlicht sein und kann untereinander gleiche hydraulische Aktoren und jeweils zugehörige hydraulische Versorgungseinheiten aufweisen. Auch die Träger für deren Montage können gleich sein. Eine Adaption an die jeweilige fahrzeugspezifische Anbausituation kann durch die Montagebeschläge erfolgen. Die dezentrale hydraulische Hubstützenanordnung ist einerseits durch den hohen Vereinheitlichungsgrad aufwandsarm und kostengünstig und bietet andererseits über die Montagebeschläge eine große Adaptionsbreite auf ebenfalls kostengünstige und einfache Weise. Die beanspruchte dezentrale Hubstützenanordnung lässt sich dadurch vielfältig einsetzen. Sie kann bei der Erstausrüstung eines Straßenfahrzeugs oder auch im Wege der Nachrüstung montiert werden. Bei einem Fahrzeugwechsel kann die Hubstützenanordnung vom Betreiber mitgenommen und am nächsten Fahrzeug montiert werden, wobei ggf. nur die Montagebeschläge zu tauschen sind.

Der hydraulische Aktor und die hydraulische Versorgungseinheit nebst den verbindenden hydraulischen Leitungen bilden einen geschlossenen Hydraulickreis. Die hydraulische Hubstütze bzw. ihre Stützeinheit sind dadurch autonom und bedürfen keiner externen Zuführung von Hydraulikflüssigkeit.

Es genügt die Zuführung von Energie für die Pumpenanordnung, insbesondere von elektrischem Strom für einen elektrischen Pumpenantrieb, vorzugsweise Gleichstrom für einen elektrischen Gleichstrommotor. Durch die autonome Ausbildung der hydraulischen Hubstützen und die dezentrale Hubstützenanordnung wird nur wenig Platz im Straßenfahrzeug bzw. im Fahrgestell benötigt. Der Leitungsaufwand wird reduziert und kann sich auf elektrische Leitungen beschränken. Diese Leitungen für Leistungs- und Signalströme sind flexibel und brauchen wenig Platz. Sie lassen sich ohne größeren Aufwand am Fahrzeug verlegen und an die jeweilige Einbausituation adaptieren.

Die hydraulische Versorgungseinheit weist eine Pumpenanordnung, einen Tank für Hydraulikflüssigkeit, Leitungsanschlüsse für die hydraulischen Leitungen zum Aktor und eine Steueranordnung auf. In einem Erfindungsgedanken ist vorgesehen, dass die Hubstütze bzw. der Aktor und die Versorgungseinheit einen gemeinsamen geschlossene Hydraulikkreis aufweisen und der Tank eine für die Lebensdauer ausreichende und bevorzugt vollständige Befüllung mit einem Hydraulikfluid (sog. Lifetime-Füllung) hat. Der geschlossene Hydraulikkreis bedarf keiner besonderen Pflegemaßnahmen durch Entlüftung, Nachfüllen etc.. Hydraulikverluste werden durch die kleine Kreisdimension minimiert. An den geschlossenen Hydraulickreis kann an geeigneter Stelle ein Druckausgleich angeschlossen sein, z.B. im Tank- oder Zylinderbereich. Damit kann auch das Kolbenstangenvolumen kompensiert werden.

Mit dem geschlossenen Hydraulikkreis und einem steuerbaren elektrischen Pumpenantrieb kann ein elektrohydraulischer Direktantrieb für die hydraulische Hubstütze gebildet werden. Die Ein- und Ausfahrbewegungen der hydraulischen Hubstütze können direkt über den Pumpenantrieb bzw. dessen Elektromotor gesteuert werden.

Im weiteren ist vorgesehen, dass die Pumpenanordnung der hydraulischen Versorgungseinheit elektrisch angetrieben ist und einen Stromanschluss für eine stromzuführende Leitung sowie einen mit dem Fahrgestell leitend verbindbaren Masseanschluss aufweist. Hierdurch kann der Leitungsaufwand vereinfacht und minimiert werden. Insbesondere können durch den Entfall einer separaten Masseleitung die stromzuführenden Leitungen kleiner, flexibler und leichter verlegbar sowie montierbar gestaltet sein. Das üblicherweise metallische Fahrgestell kann für die Masserückführung zur Energieversorgung, insbesondere zu einer fahrzeugeigenen Batterie oder einem Akku, genutzt werden.

Die autonome hydraulische Hubstütze weist einen den Bodenkontakt und ggf. eine Einfahr-Endstellung detektierenden Sensor auf. Dies kann z.B. der Drucksensor im Hydraulikkreis sein. Durch diese Detektionsmöglichkeit kann die Ausfahrbewegung der hydraulischen Hubstütze in Abhängigkeit vom Erreichen eines Bodenkontakts gesteuert und überwacht werden. Außerdem kann mit dem Drucksensor,
auch der Kraftaufbau nach Erreichen des Bodenkontakts überprüft werden. Dies kann in Verbindung mit einer Überwachung des Pumpenantriebs der hydraulischen Versorgungseinheit erfolgen, um das Sensorergebnis zu verifizieren und auf Plausibilität zu überprüfen. Im Endeffekt kann überwacht und festgestellt werden, ob die Hubstütze tatsächlich ausgefahren ist und ihre Stützfunktion erfüllt.

Dies kann für die hydraulische Hubstütze einzeln und individuell sowie unabhängig von den anderen Hubstützen überwacht und gesteuert werden. Bei der dezentralen hydraulischen Hubstützenanordnung kann dadurch überwacht und sichergestellt werden, dass tatsächlich bei einer Betätigung alle eingebundenen hydraulischen Hubstützen ausgefahren sind und Bodenkontakt haben sowie ihre Stützfunktionen erfüllen.

Das gleiche vorgenannte Prinzip der sensorischen Erfassung des Kraftaufbaus kann auch für die sichere Erkennung eines Einfahrstellung und eines dortigen Endanschlags der Hubstütze benutzt werden.

Die dezentrale hydraulische Hubstützenanordnung hat mehrere hydraulische und autonome Hubstützen mit einer jeweils zugeordneten eigenen hydraulischen Versorgungseinheit und außerdem eine gemeinsame Steuereinrichtung für die Hubstützen. Die Steuereinrichtung weist eine integrierte elektrische Leistungs-Endstufe, insbesondere Halbleiter-Endstufe, für die Stromversorgung der elektrischen Pumpenantriebe der hydraulischen autonomen Hubstützen auf. Sie kann ferner eine Steuereinheit bzw. Steuerelektronik beinhalten. Die Stromversorgung und deren Steuerung für elektrischen Pumpenantriebe kann zentral von der Steuereinrichtung bewirkt werden. Die Leistungs-Endstufe und die Steuereinheit bzw. Steuerelektronik können gemeinsam auf einer einzelnen Steuerplatine angeordnet sein.

Dies hat einerseits den Vorteil, dass die Stromversorgung der Hubstützen über kleinere und besser verlegbare elektrische Leitungen erfolgen kann. Andererseits kann die Stromversorgung über eine bevorzugt halbleitergesteuerte elektrische Leistungs-Endstufe besser und genauer als beim Stand der Technik erfolgen, bei dem die elektrischen Pumpenantriebe einzeln und direkt an die Stromversorgung des Fahrzeugs angeschlossen sind und die Stromversorgung von der Steuereinrichtung nur über Relais ein- und ausgeschaltet wird.

Ein weiterer Vorteil ist die direkte Erfassung des Motorstroms der Pumpenantriebe in der Steuereinrichtung, insbesondere mittels der Steuereinheit und/oder der Leistungs-Endstufe. Die Erfassung kann nicht nur die Existenz eines Stromflusses detektieren, sondern kann bedarfsweise auch eine Messung des Motorstroms beinhalten. Die Steuereinrichtung kann diese erfassten Informationen zur gezielten Steuerung der hydraulischen Hubstützen und ihrer hydraulischen Aktoren einsetzen. Die Stromerfassung ermöglicht auch eine Detektion der Endlagen des Zylinders bzw. hydraulischen Aktors. Außerdem kann die besagte Stromerfassung auch mit dem vorgenannten Sensorsignal für die Detektion eines Bodenkontakts oder eines Einfahr-Endanschlags verknüpft und steuertechnisch ausgewertet und genutzt werden.

Ferner ist generell vorgesehen, dass die Steuereinrichtung mit Drucksensoren in einem Hydraulikkreis der Hubstützen signaltechnisch verbunden ist und die mit Bodenkontakt ausgefahrenen sowie ggf. nivellierten Hubstützen auf ein untereinander abgestimmtes hydraulisches Druckverhältnis, insbesondere auf Erreichen eines gleichen vorgegebenen Schwellwerts für den hydraulischen Druck, steuert. Dies kann insbesondere bei oder nach einer Nivellierung geschehen.

Die Steuereinrichtung ist an die Stromversorgung des Straßenfahrzeugs angeschlossen und kann dank der Leistungs-Endstufe die Hubstützen, insbesondere deren jeweiligen elektrischen Pumpenantrieb, einzeln und individuell mit Strom versorgen. Sie kann die Stromversorgung steuern und bedarfsweise auch regeln. Im einfachsten Fall beschränkt sich die Steuerung auf ein Ein- und Ausschalten. Bedarfsweise können komplexere Steuertechniken, z.B. mit variablen Motor- und Pumpenleistungen, gefahren werden. Eine hydraulische Hubstütze kann z.B. mit variablen Geschwindigkeiten, insbesondere im Schnellgang und im Schleichgang ein- und ausgefahren werden.

Insbesondere kann die Steuereinrichtung die Hubstützen einzeln und individuell unter Prüfung ihres Bodenkontakts steuern. Dies ist von Vorteil, um bei der dezentralen Hubstützenanordnung den sicheren Stand und den Bodenkontakt aller hydraulischen Hubstützen sicherzustellen.

Die Ausbildung der Steuereinrichtung ist für die beanspruchte Sicherungstechnik besonders günstig. Sie erleichtert auch die Minimierung und Vereinfachung des Platz-, Bau- und Steueraufwands und die Implementierung der Sicherungstechnik in die Steuereinrichtung.

Die Steuereinrichtung kann ein abgedichtetes Gehäuse aufweisen. Sie kann für eine Montage an einem bevorzugt metallischen Fahrgestell adaptiert sein. Sie lässt sich dadurch platzsparend und ohne räumliche Beeinträchtigung für den Aufbau- oder Fahrzeughersteller an geeigneter Stelle platzieren.

Dies kann z.B. im Bereich einer hinteren Achsordnung erfolgen. Eine andere günstige Anbaustelle befindet sich im Bereich einer Verbindungsstelle zwischen einem vorderen Fahrgestellteil im Bereich der Kabine oder eines evtl. Zukopfes und einem hinteren Fahrgestellbereich, insbesondere einem Anbauchassis, das nachträglich an einem Zugkopf montiert wird. An dieser Verbindungsstelle kann ein Höhenversatz zwischen den Fahrgestellteilen bestehen und durch einen Adapter ausgeglichen werden. In der Nähe dieses Adapters kann die Steuereinrichtung an einem Längsträger des Anbauchassis oder eines hinteren Fahrgestellbereichs montiert werden.

Die Steuereinrichtung und ggf. die beanspruchte Sicherheitstechnik kann mit einem einzeln oder mehrfach vorhandenen Bediengerät manuell bedient werden. Das Bediengerät kann stationär und/oder mobil angeordnet und mit der Steuereinrichtung per Kabel oder drahtlos verbunden sein, wobei entsprechende Kommunikationseinheiten in der Steuereinrichtung und im Bediengerät angeordnet sind. Das Bediengerät kann mehrere Eingabeelemente für wahlweise manuelle Bedienung oder automatische Nivellierung und/oder Eingabeelemente für Sonderpositionen, vorzugsweise Neigungen, des Straßenfahrzeugs, insbesondere Fahrgestells, aufweisen. Sonderpositionen können programmiert bzw. geteached und gespeichert werden.

Das Bediengerät kann ein speziell für die beanspruchte Sicherheitstechnik ausgebildetes Gerät sein. Das Bediengerät kann alternativ ein Smartphon, Tablett oder sonstiges universelles Kommunikationsgerät mit eigener Intelligenz und Anzeige, z.B. Touchscreen, sein, das mittels einer App betrieben wird. Die App kann z.B. zur automatischen Detektion von Gewichtsmerkmalen des Straßenfahrzeugs, z.B. der vorderen und hinteren Achslasten, der Schwerpunktlage oder dgl., eingesetzt werden.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: ein motorisiertes Straßenfahrzeug mit einem Fahrgestell und einer dezentralen hydraulischen Hubstützenanordnung in einer schematischen Seitenansicht,
- Figur 2 und 3:: eine perspektivische Ansicht und eine Draufsicht auf ein Fahrgestell mit einer Hubstützenanordnung gemäß Figur 1,
- Figur 4:: eine abgebrochene perspektivische Ansicht einer am Chassis montierten autonomen hydraulischen Hubstütze,
- Figur 5:: eine perspektivische Ansicht einer autonomen hydraulischen Hubstütze,
- Figur 6 und 7:: einen hydraulischen Aktor der Hubstütze von Figur 5 in perspektivischer Ansicht und im Längsschnitt,
- Figur 8:: einen Schemaplan der Hubstützenanordnung mit einer Nivelliereinrichtung und einer Sicherungseinrichtung mit einer Fahrkontrolle,
- Figur 9:: ein Bediengerät für die Hubstützenanordnung,
- Figur 10:: einen Schemaplan der Hubstützenanordnung und der Sicherungseinrichtung mit einer Fahrkontrolle,
- Figur 11:: ein Straßenfahrzeug mit einer Sicherungseinrichtung mit einer Detektionseinrichtung und
- Figur 12 und 13:: eine Sicherungseinrichtung mit einer Umgebungserfassungseinrichtung in verschiedenen Ansichten.

Die Erfindung betrifft eine Hubstützenanordnung (3) für ein Fahrzeug (1) mit einer Sicherungseinrichtung (73,86,94).

Die eine Sicherungseinrichtung (73) ist als Fahrkontrolle für die Hubstützenanordnung (3) und ihre Hubstützen (4,7) ausgebildet. Die andere Sicherungseinrichtung (86) ist eine Detektionseinrichtung für Gewichtsmerkmale des Fahrzeugs (1). Die dritte Sicherungseinrichtung (94) ist als Umgebungserfassungseinrichtung ausgebildet.

Die Sicherungseinrichtungen (73,86,94) können eigenständige Bau- und Funktionseinheiten sein, z.B. in Form von Software- und/oder Hardwaremodulen. Die Sicherungseinrichtungen (73,86,94) können an einer bestehenden Hubstützenanordnung (3) nachgerüstet oder umgerüstet werden. Sie können auch integraler Bestandteil und Erstausrüstung einer Hubstützenanordnung (3) sein. Die Sicherungseinrichtungen (73,86) können insbesondere in eine Steuereinrichtung (57) der Hubstützenanordnung (3) implementiert oder in anderer Weise, z.B. durch Zuschalten eines Hardwaremoduls, der Steuereinrichtung (57) zugeordnet sein.

Die Hubstützenanordnung (3) ist für ein motorisiertes Straßenfahrzeug (1), nämlich ein Wohnmobil, vorgesehen und ausgebildet. Sie kann als dezentrale und hydraulische Hubstützenanordnung (3) mit autonomen hydraulischen Hubstützen (4,7) ausgebildet sein. Alternativ kann sie als zentrale hydraulische Hubstützenanordnung (3) gestaltet sein. Sie kann auch für andere Straßenfahrzeuge (1), z.B. Anhänger,

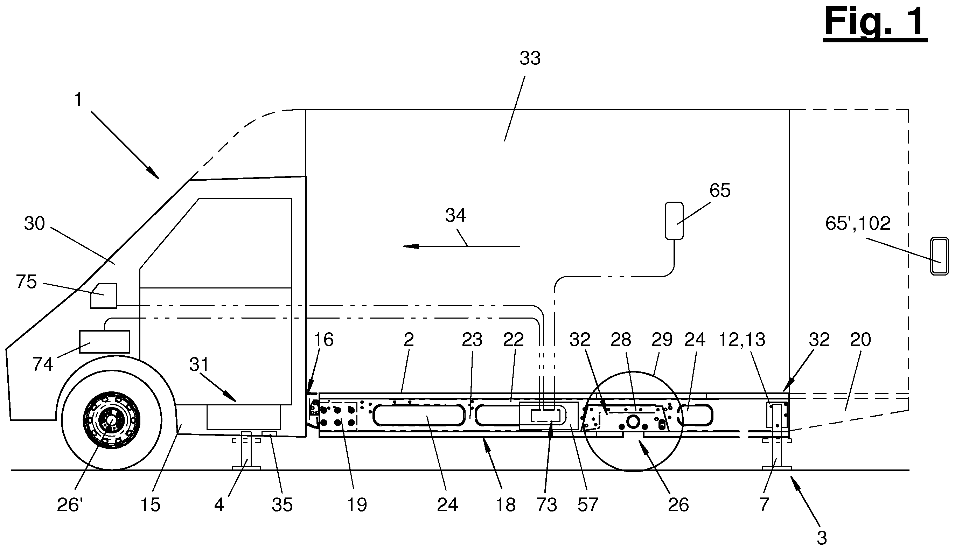

Figur 1 zeigt schematisch ein motorisiertes Fahrzeug (1) mit einem Fahrgestell (2) und einer dezentralen hydraulischen Hubstützenanordnung (3). Die Hubstützen (4,7) sind in ausgefahrener Stellung mit Volllinien und gestrichelt in eingefahrener oder angehobener Stellung dargestellt.

Das Fahrzeug (1) ist ein Straßenfahrzeug und weist einen vorzugsweise frontseitig angeordneten Fahrantrieb mit einem Motor nebst Getriebe und einer angetriebenen, vorzugsweise vorderen Achse auf. Das Straßenfahrzeug (1) besitzt einen Aufbau (33) und eine frontseitige Fahrerkabine (30), die in den Aufbau (33) integriert oder separat angeordnet sein kann. An der Fahrerkabine (30) befindet sich eine Einstiegstelle (31). Hier kann eine Trittstufe angeordnet sein. Die vorbezeichneten Richtungsangaben für vorne und hinten beziehen sich jeweils auf die durch Pfeil (34) angegebene Fahrtrichtung bzw. Fahrzeuglängsachse.

Das Straßenfahrzeug (1) weist einen Geber (74) für ein Startsignal, z.B. ein Zündungssignal, des Fahrzeugs bzw. Motors auf. Ferner kann eine Fahrzeugsteuerung (nicht dargestellt) vorhanden sein. Der Geber (74) und/oder die Fahrzeugsteuerung können mit der Sicherungseinrichtung (73) signaltechnisch sowie uni- oder bidirektional verbunden sein.

Ferner können nicht dargestellte Sensoren für den Betriebszustand des Straßenfahrzeugs (1) vorhanden und mit der Sicherungseinrichtung (73) signaltechnisch verbunden sein. Dies können z.B. Sensoren für die Handbremse, die Fahrersitzbelegung, die Kupplung, eine Getriebegang-Erkennung oder dgl. sein.

Im Straßenfahrzeug (1), insbesondere in der Fahrerkabine (30), kann eine Warneinrichtung (75) angeordnet sein. Diese kann auf beliebige Weise ein wahrnehmbares Warnsignal im Straßenfahrzeug (1) emittieren, z.B. akustisch und/oder optisch und/oder haptisch. Die Warneinrichtung (75) kann ein separates und ggf. zum Umfang der Sicherungseinrichtung (73) gehörendes Teil oder ein Fahrzeugbestandteil, z.B. ein Display im Armaturenbrett sein.

Das Fahrgestell (2), dass auch als Chassis bezeichnet wird, kann als ein einheitliches und über die Fahrzeuglänge durchgehendes Fahrgestell ausgebildet sein. In der gezeigten und bevorzugten Anordnung ist das Fahrgestell (2) unterteilt. Es kann aus einem frontseitigen Zugkopf (15) mit einem eigenen Zugkopfchassis (16) nebst einer Vorderachse (26') und aus einem Anbauchassis (18) bestehen, die ggf. von unterschiedlichen Herstellern stammen. Das Zugkopfchassis (15) weist den Fahrantrieb mit Motor und Getriebe, eine Lenkeinrichtung und eine frontgetriebene Vorderachse auf. Das Zugkopfchassis (16) kann mit dem Anbauchassis (18) über einen Adapter (19) verbunden sein, der ggf. einen Höhenunterschied gegenüber dem bevorzugt tiefer gelegten Anbauchassis (18) ausgleicht. Das Anbauchassis (18) weist eine hintere Achsanordnung (26) auf, die in der gezeigten Ausführungsform nicht angetrieben ist und als Schleppachse ausgebildet ist. Alternativ kann das Straßenfahrzeug (1) einen Heckantrieb mit einer angetriebenen hinteren Achsanordnung aufweisen. Hierfür eignet sich z.B. ein über die Fahrzeuglänge durchgehendes Fahrgestell.

Die Achsanordnung (26) kann eine oder mehrere Achsen aufweisen. Das Straßenfahrzeug (1) weist außerdem eine Betriebs- und Feststellbremse auf.

Das Fahrgestell (2) kann sich in mehrere Fahrgestellteile (16,20,22) unterteilen. Dies können z.B. das frontseitige Zugkopfchassis (16) und das Anbauchassis (18) oder bei einer einteiligen Chassisausführung der vordere Fahrgestellteil (16) sowie ein hinterer Chassisbereich sein. Das Anbauchassis (18) und der hintere Chassisbereich weisen jeweils eine Achsanordnung (26) auf.

Die Längsträger (22) können durch ein oder mehrere Querträger (25) quer verbunden sein. Hierdurch kann ein Trägerrahmen, insbesondere ein Leiterrahmen, gebildet werden. Die Längs- und Querträger (22,25) können z.B. aus Stahl oder einer Leichtmetalllegierung bestehen.

Das Fahrgestell (2) weist eine dezentrale hydraulische Hubstützenanordnung (3) auf, mit der das Fahrgestell (2) und das Fahrzeug (1) im Stand abgestützt und ggf. angehoben werden können, wobei die Räder (29) und die Achsen bzw. deren Federungen entlastet werden können. Die Hubstützenanordnung (3) kann mehrere autonome hydraulische Hubstützen (4,7) aufweisen.

Die hydraulischen Hubstützen (4,7) weisen jeweils eine ausfahrbare und zur eigenen Abstützung an einem Untergrund ausgebildete Stützeinheit (9) mit einem hydraulischen Aktor (36) und einer zugeordneten eigenen hydraulischen Versorgungseinheit (37) auf, die als separate und mit gegenseitiger Distanz am Straßenfahrzeug (1) eigenständig montierbare Einheiten ausgestaltet sind. Der hydraulische Aktor (36) und die hydraulische Versorgungseinheit (37) sind durch schlauchförmige und flexible hydraulische Leitungen (53) miteinander verbunden. Hierdurch wird ein geschlossener Hydraulikkreis gebildet. Am freien Ende der Stützeinheit (9) bzw. des hydraulischen Aktors (36) ist ein Stützteller (10) angeordnet.

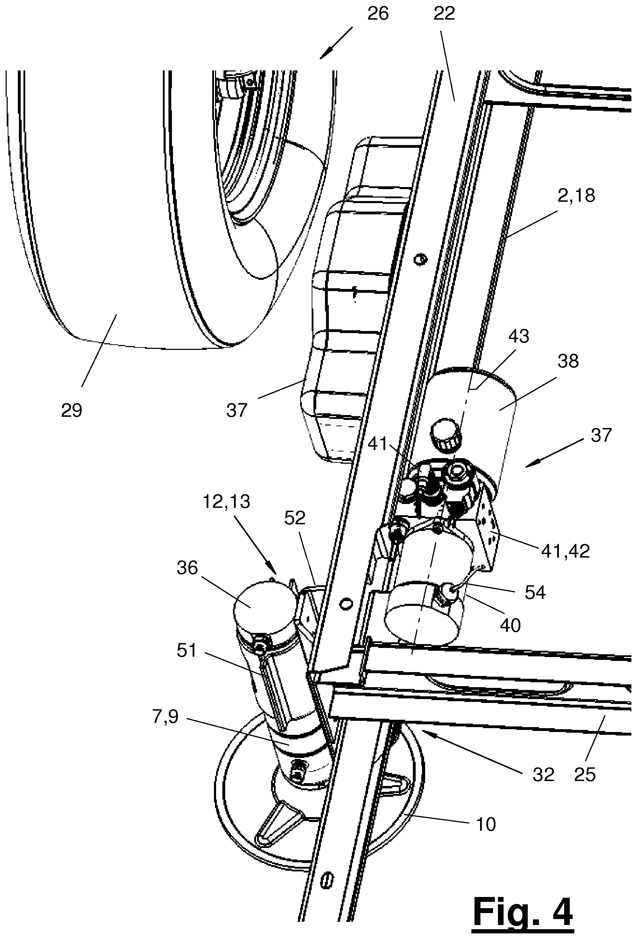

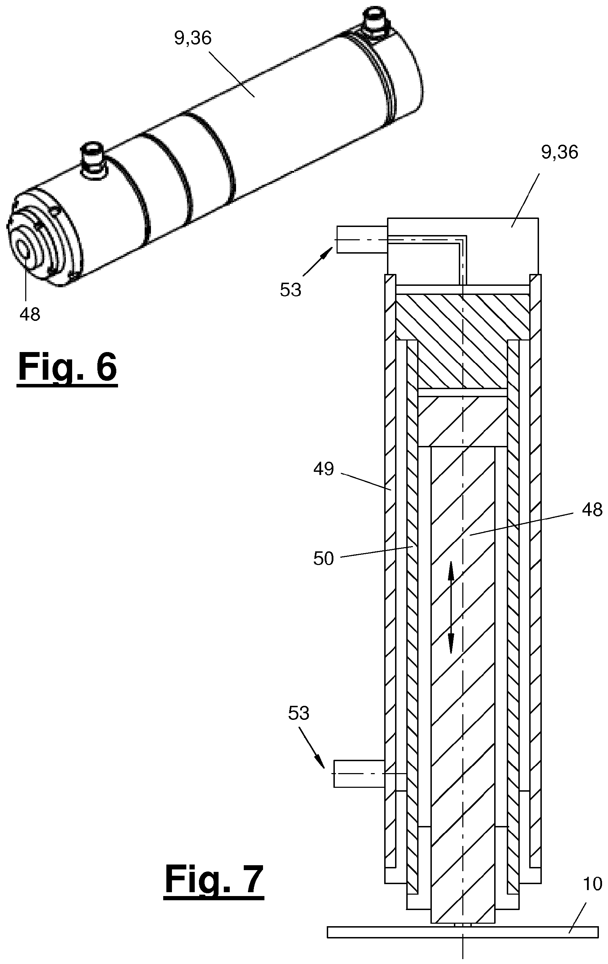

Figur 4 bis 7 verdeutlichen eine bevorzugte Ausführungsform des hydraulischen Aktors (36). Dieser ist als mehrstufig teleskopierbarer und beidseitig beaufschlagbarer hydraulischer Zylinder ausgebildet. Der Zylinder weist eine innere zentrale Kolbenstange (48) auf, die axial ein- und ausfahren kann und die mit ihrem Kolben in einem umgebenden Innenrohr (50) angeordnet ist. Das Innenrohr (50) wird seinerseits konzentrisch von einem relativ ortsfesten Außenrohr (49) umschlossen. Das Innenrohr (50) weist am oberen Ende einen Kolben auf. Am Außenrohr (49) sind mit axialer Distanz Leitungsanschlüsse angeordnet. Am freien Ende der Kolbenstange (48) ist der Stützteller (10) angeordnet.

Die Kolbenstange (48) und das Innenrohr (50) können ein- und ausfahren, vorzugsweise mit einer vorgegebenen Reihenfolge. Im Innenrohr (50) werden beidseits des Kolbens der Kolbenstange (48) hydraulische Arbeitsräume gebildet. Der Kolben ist beidseitig hydraulisch beaufschlagbar, wobei der obere Arbeitsraum mit dem oberen Leitungsanschluss am Außenrohr (48) und der untere Arbeitsraum mit dem unteren Leitungsanschluss am Außenrohr (48) verbunden ist. Zwischen dem Innenrohr (50) mit seinem Kolben und dem Außenrohr (49) werden ebenfalls obere und untere hydraulische Arbeitsräume gebildet, die zur beidseitigen Kolbenbeaufschlagung mit dem oberen und unteren Leitungsanschluss am Außenrohr (49) verbunden sind.

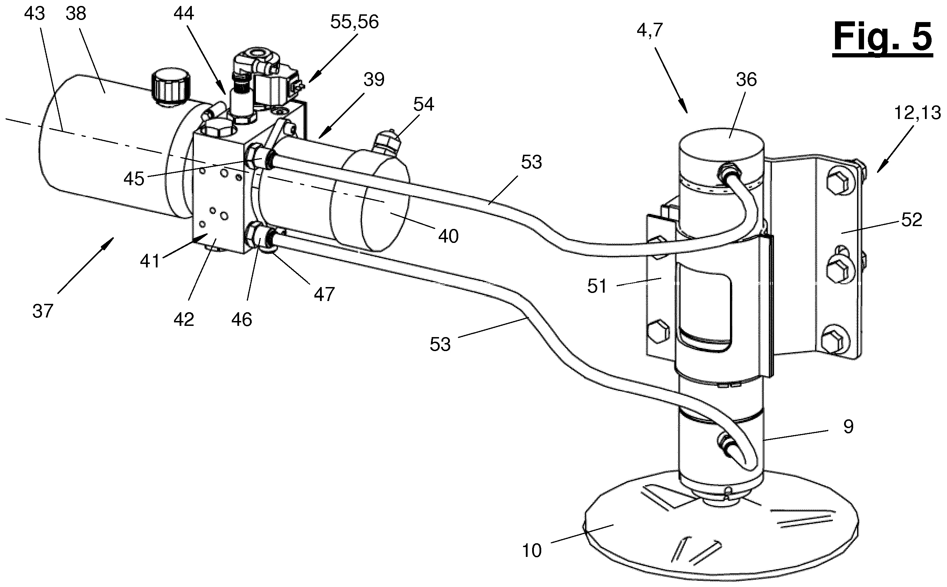

Die hydraulische Versorgungseinheit (37) ist in Figur 4 und 5 dargestellt. Sie weist eine Pumpenanordnung (39), einen geschlossenen Tank (38) mit Hydraulikflüssigkeit, vorzugsweise mit einer Lifetime-Füllung, eine Steueranordnung (41) und Leitungsanschlüsse (45,46) für die besagten hydraulischen schlauchartigen Leitungen (53) auf. Die hydraulische Versorgungseinheit (37) hat eine schlanke längliche Form. Die Pumpenanordnung (39), der Tank (38) und die Steueranordnung (41) sind dabei in einer Reihe hintereinander entlang einer Längsachse (43) der Versorgungseinheit (37) angeordnet.

Die Pumpenanordnung (39) weist einen ebenfalls axial ausgerichteten Pumpenantrieb (40) und eine Pumpeneinheit auf, die bevorzugt mit der Steueranordnung (41) in einem gemeinsamen, bevorzugt quaderförmigen Gehäuse (42) angeordnet ist. Der Pumpenantrieb (40) ist vorzugsweise als Elektromotor, z.B. als Gleichstrommotor mit Niederspannung von z.B. 12 Volt ausgebildet.

Die hydraulische Versorgungseinheit (37), insbesondere die elektrisch angetriebene Pumpenanordnung (39), weist einen Stromanschluss für eine stromzuführende Leitung (54) und einen mit dem bevorzugt metallischen Fahrgestell (2) leitend verbindbaren Masseanschluss auf. Die stromzuführende Leitung (54) kann ohne Masseleiter auskommen und kann 1-polig ausgebildet sein.

Die Pumpenanordnung (39) kann beidseitig fördernd ausgebildet sein. Dies kann durch eine beidseitig fördernde Pumpe oder durch eine einseitig fördernde Pumpe in Verbindung mit einem Umschaltventil, z.B. einem 2/4-Wegeventil, erreicht werden. Durch die beidseitige Beaufschlagung des Zylinders bzw. seiner Kolben und den geschlossenen Hydraulikkreis kann die Hubstütze (4,7) aktiv und gesteuert einfahren und ausfahren. Der Tank (38) und der Hydraulikkreis sind bei eingefahrenem Zylinder vollständig mit Hydraulikflüssigkeit gefüllt. Durch den geschlossenen hydraulischen Kreis können die Ein- und Ausfahrbewegungen der hydraulischen Hubstütze (4,7) bzw. ihres hydraulischen Aktors (36) direkt über den Pumpenantrieb (40) gesteuert werden.

Die Steueranordnung (41) ist z.B. als steuerbare Ventilanordnung, insbesondere als steuerbares Mehrwegeventil, ausgebildet und im Gehäuse (42) angeordnet. Sie kann auch Blockademittel für die Zylinderbewegung, z.B. Rückschlagventile im Hydraulikkreis, sowie Drosseln und ggf. einen Druckbegrenzer aufweisen. Die Ventilanordnung kann mit einer Feder oder dgl. beschaltet sein. Sie sperrt automatisch den Hydraulikfluss in Einfahrrichtung und ggf. Ausfahrrichtung des Aktors (36) und öffnet erst auf ein Steuersignal.

In Abwandlung der Ausführungsform kann eine drehrichtungsgebundene hydraulische Pumpenanordnung (39) eingesetzt werden. Bei falschem Pumpenanschluss wird keine Hydraulikflüssigkeit gefördert und eine Fehlfunktion der Hubstütze vermieden.

Die Leitungsanschlüsse (45,46) sind am Gehäuse (42) angeordnet. Sie sind gemeinsam an einer Stirnseite der Steueranordnung (41) bzw. des Gehäuses (42) angeordnet und sind dabei entlang der Längsachse (43) ausgerichtet. Die Leitungsanschlüsse (45,46) können drehbare Leitungskupplungen für den Anschluss der Hydraulikleitungen (53) aufweisen. Die Hydraulikleitungen (53) können gerade oder über Kreuz geführt sein.

Die hydraulische Versorgungseinheit (37) wird bevorzugt mit liegender Ausrichtung am Fahrgestell (2) montiert.

Die hydraulische Hubstütze (4,7) kann einen Sensor (44) zur Detektion eines Bodenkontakts beim Ausfahren aufweisen. Der gleiche oder ein anderer Sensor (44) kann und zur Detektion eines Endanschlags in der Einfahrstellung der Hubstütze (4,7) benutzt werden.

Der gleiche oder ein anderer Sensor (44) kann auch zu anderen Zwecken, insbesondere zur Detektion der Stützkraft der ausgefahrenen hydraulischen Hubstütze (4,7) oder der an der hydraulischen Hubstütze (4,7) einwirkenden Last eingesetzt werden.

Der Sensor (44) kann mehrfach vorhanden sein. In der gezeigten Ausführungsform ist er als Drucksensor ausgebildet und im geschlossenen Hydraulikkreis der hydraulischen Hubstütze (4,7) angeordnet. Der Drucksensor (44) ist z.B. an der hydraulischen Auslassseite der Steueranordnung (41) angeordnet. Er kann dabei im Gehäuse (42) in dem zum auslassseitigen Leitungsanschluss (45) führenden Strömungskanal angeordnet sein. Die hydraulische Hubstütze (4,7) kann weitere und ggf. auch andere Sensoren zur Funktionsüberwachung aufweisen.

Die hydraulische Versorgungseinheit (37) kann einen im Notfall lösbaren Fluidablass (47) im Hydraulickreis mit Bypass und Tankrückführung aufweisen.

Die hydraulische Hubstütze (4,7) weist einen Träger (12) und einen Montagebeschlag (13) für den hydraulischen Aktor (36) auf. Diese sind dazu ausgebildet, den hydraulischen Aktor (36) starr aufzunehmen und relativ ortsfest am Straßenfahrzeug (1), insbesondere am Fahrgestell (2) zu fixieren. Die Hubstütze (4,7) führt nur eine lineare und axiale Einfahr- und Ausfahrbewegung aus. Der Träger (12) und der Montagebeschlag (13) sind lösbar miteinander verbunden.

In den verschiedenen Varianten nehmen der Träger (12) allein oder im Zusammenwirken mit dem Montagebeschlag (13) den hydraulischen Aktor (36) mit seinem z.B. zylindrischen Gehäuse formschlüssig auf, wobei eine Führung und Sicherung bestehen, die eine Verdrehung und eine axiale Verschiebung des Aktorgehäuses verhindern.

Die dezentrale hydraulische Hubstützenanordnung (3) weist mehrere, insbesondere vier, hydraulische und autonome Hubstützen (4,7) mit einer gemeinsamen Steuereinrichtung (57) auf. Die Hubstützen (4,7) können jeweils einen hydraulischen Aktor (36) und eine zugeordnete eigene hydraulische Versorgungseinheit (37) aufweisen, die in der vorbeschriebenen Weise getrennt voneinander angeordnet und durch schlauchförmige hydraulische Leitungen (53) miteinander verbunden sind. In einer anderen Variante können sie gemeinsam in einem Gehäuse angeordnet sein.

Die Steuereinrichtung (57) weist eine integrierte elektrische Leistungs-Endstufe (61) für die Stromversorgung der elektrischen Pumpenantriebe (40) der hydraulischen autonomen Hubstützen (4,7) auf. Die Steuereinrichtung (57) ist an die elektrische Energieversorgung (64), z.B. eine Batterie oder einen Akku, angeschlossen. Dies kann die bordeigene Energieversorgung (64) des Straßenfahrzeugs (1) oder eine andere und z.B. der Hubstützenanordnung (3) zugeordnete Energieversorgung sein.

Die Steuereinrichtung (57) versorgt über die Endstufe (61) die Hubstützen (4,7), insbesondere deren jeweiligen elektrischen Pumpenantrieb (40), einzeln und individuell mit Strom. Die Steuereinrichtung (57) kann die Hubstützen (4,7) einzeln und individuell unter Prüfung ihres Bodenkontakts steuern. Die Steuereinrichtung (57) kann ferner individuell die an die elektrischen Pumpenantriebe (40) abgegebenen Ströme erfassen. Sie kann auch mittels der Stromerfassung die Endlagen der hydraulischen Hubstützen (4,7), bzw. ihrer hydraulischen Aktoren (36) detektieren.

Die Leistungs-Endstufe ist bevorzugt als Halbleiter-Endstufe ausgeführt. Die Steuereinrichtung (57) weist ferner eine Steuereinheit (60), insbesondere eine Steuerelektronik mit ein oder mehreren Mikroprozessoren, Datenspeichern und Steuersoftware auf. Die Leistungs-Endstufe (61) und die bevorzugt programmierbare Steuereinheit (60) können gemeinsam auf einer einzelnen Steuerplatine (59) angeordnet sein. Die besagte Stromerfassung kann von der Steuereinheit (60) und/oder der halbleitergesteuerten Leistungs-Endstufe (61) mit geeigneten Mitteln durchgeführt werden. Ferner kann eine Diagnose-Software vorhanden sein.

Die Steuereinrichtung (57) ist mit den einen Bodenkontakt oder einen Einfahr-Endanschlag detektierenden Sensoren (44), insbesondere den Drucksensoren, der Hubstützen (4,7) signaltechnisch verbunden. Die Steuereinrichtung (57) steuert die hydraulischen Hubstützen (4,7) jeweils einzeln und in Abhängigkeit vom Sensorsignal des Sensors (44) und vom detektierten Motorstrom des jeweiligen elektrischen Pumpenantriebs (40). Die Erfassung der Motorströme kann auf beliebig geeignete Weise, z.B. an der Leistungs-Endstufe (61) oder an der Steuereinheit bzw. Steuerelektronik (60) erfolgen.

Generell kann die Steuereinrichtung (57) mit Drucksensoren in einem Hydraulikkreis der Hubstützen (4,7) signaltechnisch verbunden sein und kann die mit Bodenkontakt ausgefahrenen sowie nivellierten hydraulischen Hubstützen (4,7) auf ein untereinander abgestimmtes hydraulisches Druckverhältnis einstellen, insbesondere steuern oder regeln. Dies kann z.B. während oder nach der Nivellierung erfolgen. Das Nivellieren kann automatisch oder manuell erfolgen. Dabei kann eine horizontale Fahrzeuglage und/oder eine bewusste Schräglage bzw. Fahrzeugneigung, z.B. eine Schlafneigung, eingestellt werden.

Das gesteuerte Druckverhältnis kann z.B. das Erreichen und ggf. Überschreiten eines vorgegebenen Mindestwerts des hydraulischen Drucks betreffen. Damit kann ein Bodenkontakt und eine Mindestbelastung aller Hubstützen (4,7) detektiert und eingestellt werden. In einer anderen Variante kann auf gleichen hydraulischen Druck gesteuert bzw. geregelt werden. Alternativ können andere abgestimmte Druckverhältnisse eingestellt werden.

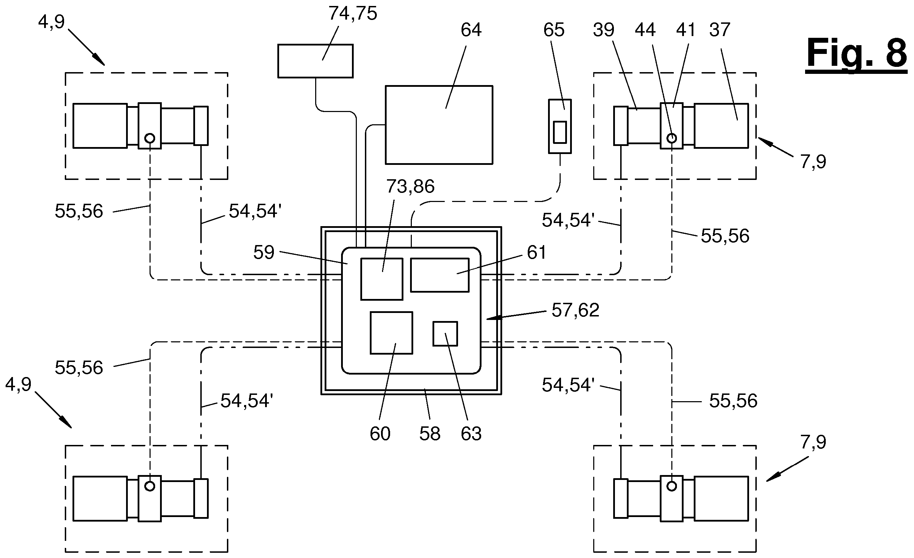

Die Steuereinrichtung (57) kann eine integrierte Nivelliereinrichtung (62) zur Einstellung der gewünschten Lage und Neigung des Fahrgestells (2) aufweisen. Die Nivelliereinrichtung (62) beinhaltet eine in Figur 8 angedeutete Erfassungseinrichtung (63) für die Fahrzeuglage, insbesondere die Fahrgestellneigung. Dies kann eine horizontale Ausrichtung und ggf. eine andere gewünschte Fahrzeugneigung, z.B. eine Schlafneigung betreffen. Eine solche Fahrzeugneigung kann voreingestellt und ggf. verändert werden, z.B. durch herstellerseitige oder bedienerseitige Programmierung und Speicherung.

Die Erfassungseinrichtung (63) kann in beliebig geeigneter Weise ausgebildet sein, z.B. als elektrische Libelle oder als andere Anordnung von einem oder mehreren elektrischen Neigungssensoren, insbesondere Beschleunigungssensoren. Die Verarbeitung der Erfassungs- und Neigungssignale kann in einer eigenständigen Steuereinheit der Nivelliereinrichtung (62) oder in der Steuereinheit (60) bzw. Steuerelektronik der Steuereinrichtung (57) erfolgen. Die Erfassungseinrichtung (63) ist vorzugsweise ebenfalls auf der gemeinsamen Steuerplatine (59) angeordnet. Sie kann sich alternativ an anderer Stelle befinden.

Die Steuereinrichtung (57) ist schematisch in Figur 8 dargestellt. Die Steuereinheit (60) ist über Leitungen (55) mit den Steuerungsanordnungen (41) und über Leitungen (56) mit den Sensoren (44) der hydraulischen Hubstützen (4,7) verbunden. Die Leitungen (55,56) können Steuerleitungen bzw. Signalleitungen sein. Die Endstufe (61) ist über die Stromleitungen (54) mit den Pumpenantrieben (40) verbunden.

Die Steuereinrichtung (57), insbesondere ihre Steuereinheit (60), ist mit ein oder mehreren externen Bediengeräten (65,65') per Kabel oder drahtlos verbunden. Hierfür weisen das Bediengerät (65) und die Steuereinheit (60) entsprechende Kommunikationseinheiten mit Sende- und Empfangsteil auf. Eine drahtlose Kommunikation kann z.B. per Funk, insbesondere per Bluetooth oder dgl., erfolgen.

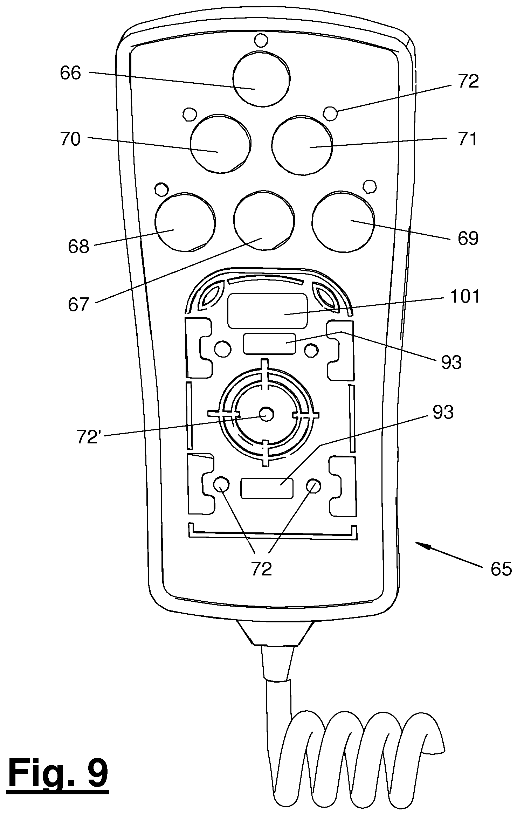

Das in Figur 9 dargestellte Bediengerät (65) kann stationär am Straßenfahrzeug (1) oder mobil angeordnet sein. Es kann z.B. eine Fernbedienung mit Kabel oder mit drahtloser Kommunikation darstellen.

Das Bediengerät (65) kann für den Einsatz bei der Sicherungseinrichtung (73,86,94) und bei einer Hubstützenanordnung (3) adaptiert sein. Es weist mehrere Eingabeelemente (67,68,69) für eine wahlweise manuelle Bedienung oder eine automatische Nivellierung oder ein automatisches Einfahren der Hubstützen auf. Mit dem Eingabeelement (68) werden die Hubstützen (4,7) automatisch ausgefahren und eine automatische Nivellierung durchgeführt. Das Eingabeelement (69) bewirkt ein automatisches Einfahren der Hubstützen (4,7) bis Erreichen des Endanschlags. Eine Umschaltung auf manuellen Betrieb erfolgt über das Eingabeelement (67). Bei manueller Bedienung können mit den Bedienelementen (68,69) die Hubstützen (4,7) ein- und ausgefahren werden. Ferner kann ein Eingabeelement (66) für das Ein- und Ausschalten des Bediengeräts (65) sowie ggf. für einen Nothalt vorhanden sein.

Mit Eingabeelementen (70,71) können ein oder oder mehrere Sonderpositionen, vorzugsweise Neigungen, des Straßenfahrzeugs (1), insbesondere des Fahrgestells (2), angewählt werden. Diese Sonderpositionen können vorprogrammiert oder vom Nutzer eingelernt und gespeichert werden. Sonderpositionen können unterschiedliche Neigungen für eine besonders gute Schlafstellung oder für eine Tankentleerung oder für andere Zwecke, z.B. zur Neigungsanpassung für eine heckseitige Auffahrrampe, sein.

Das Bediengerät (65) kann ferner eine oder mehrere Anzeigen (72) aufweisen, die optisch, akustisch, haptisch oder in anderer Weise signalisieren. Sie können Quittungssignale bei der Betätigung von Eingabeelementen (66-71) ausgeben und/oder in einer Schemadarstellung des Fahrgestells die beaufschlagten Hubstütze(n) (4,7) anzeigen. Eine zentrale Anzeige (72') kann die Nivelliermöglichkeit, den Nivellierbetrieb und eine erfolgreiche Nivellierung, insbesondere in Horizontallage, signalisieren. Ferner können Warn- und Zustandmeldungen sowie Fehlerdiagnosen angezeigt werden. Komplexere Informationen können auf andere, nicht dargestellte Weise, z.B. über ein Display, dem Bediener mitgeteilt werden.

Das Bediengerät (65) kann auch eine oder mehrere Anzeigen (93,101) für eine oder mehrere Sicherungseinrichtungen (73,86,93) aufweisen. Die Anzeigen (72,72',93,101) können kombiniert bzw. multifunktional sein.

Das Bediengerät (65) kann in einer anderen Variante als universelles Kommunikationsgerät (65') ausgebildet sein, welches eine eigene Intelligenz nebst Programm- und Datenspeicher, eine Anzeige (72,93), eine Energieversorgung und eine bevorzugt drahtloser Kommunikationseinheit, z.B. auf Basis von Bluetooth, Infrarot oder dgl., aufweist. Ein solches in Figur 1, 10 und 11 schematisch gezeigtes universelles Kommunikationsgerät (65') kann z.B. ein Smartphon, ein Tablet, ein Notebook, eine Universal-Fernbedienung oder dgl. sein.

Die Anzeige (72,93,101) kann z.B. als Bildschirm (102), insbesondere Touchscreen, ausgebildet sein. Die Eingabeelemente (66-71) können durch mechanische Tasten und/oder in optischer Form, z.B. durch sensitive Eingabefelder, am Bildschirm (102) realisiert sein. Die Intelligenz kann durch eine Rechen- und Steuereinheit mit einem oder mehreren Microprozessoren gebildet werden. Die Bedienung bzw. Steuerung der Hubstützenanordnung (3) und/oder der Sicherungseinrichtung (73,86,94) sowie die Kommunikation und Anzeige kann durch ein Programm, insbesondere eine sog. App, erfolgen.

Das universelle Kommunikationsgerät (65') kann über eine drahtlose Kommunikationseinheit (nicht dargestellt) auf der Steuerplatine (59) der Steuereinrichtung (57) oder an einer Sicherungseinrichtung (73,86,94) kommunizieren. Ferner ist es möglich, die Steuereinrichtung (57) oder eine Sicherungseinrichtung (73,86,94) über einen Datenbus (103), z.B. einen CAN-Bus, mit einer externen Kommunikationseinheit (76"), z.B. einer Kommunikationsbox, zu verbinden.

Die Kommunikationseinheit (76") kann eine drahtlose, z.B. funkbasierte, Sende- und Empfangseinheit aufweisen und kann z.B. an beliebiger Stelle am Fahrzeug, z.B. am Fahrgestell (2) oder am Aufbau (33) angeordnet sein. Die Kommunikationseinheit (76") kann ggf. eine eigene Intelligenz nebst Programm- und Datenspeicher zur Kommunikation und zur Datenverarbeitung auf Programm- oder App-Basis und zur Bedienung und Steuerung der Hubstützenanordnung (3) und/oder der Sicherungseinrichtung (73,86,94) aufweisen. Die Kommunikationseinheit (76"), z.B. Kommunikationsbox, kann auch zu anderen Kommunikationszwecken und somit universell, eingesetzt werden.

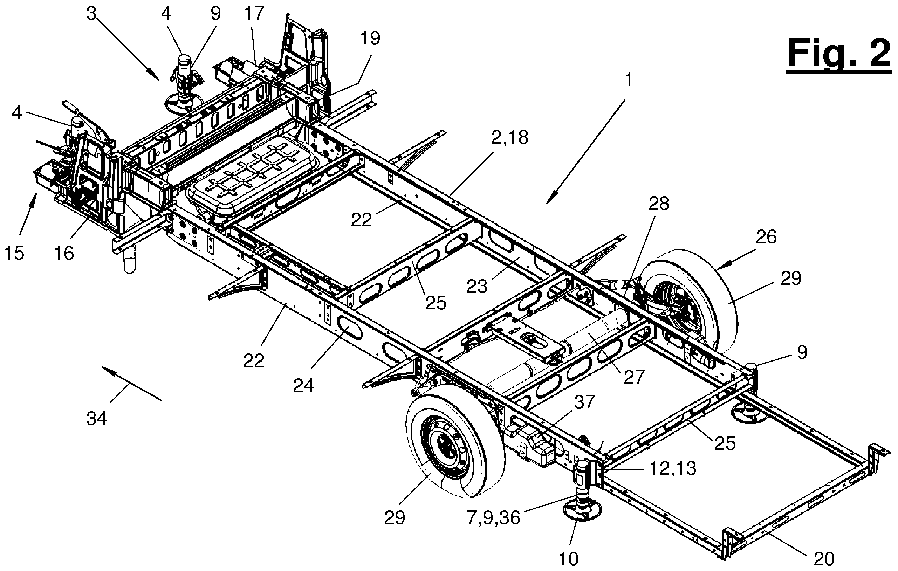

In Figur 1 bis 4 sind Ausführungsbeispiele mit Anbaumöglichkeiten für Hubstützen (4,7) als beispielhafter Überblick dargestellt. Die Hubstützen (4,7) sind vorzugsweise in Fahrtrichtung (34) beidseits am Fahrgestell (2) angeordnet und bilden ein Hubstützenpaar. Vorzugsweise weist die Hubstützenanordnung (3) zwei solcher Paare auf, die im Front- und Heckbereich des Fahrgestells (2) angeordnet sind. Die Zahl der Paare kann alternativ größer sein.

Die Hubstützenanordnung (3) weist die besagte Sicherungstechnik, d.h. die Sicherungseinrichtung(en) (73,86,93) und das sichere Betriebsverfahren, für die sichere Funktion und den sicheren Betrieb der Hubstützen (4,7) sowie des Fahrzeugs (1) auf. Die als Fahrkontrolle für die Hubstützenanordnung (3) ausgebildete Sicherungseinrichtung (73) ist in Figur 1, 3, 8 und 10 schematisch dargestellt. Sie kann die Hubstützen (4,7) direkt oder mittelbar über die Steuereinrichtung (57) und deren Steuerplatine (59) sowie Steuerelektronik (60) ansteuern und betätigen.

Die Sicherungseinrichtung (73) kann als Steuermodul ausgebildet sein. Dies kann ein Software- und/oder Hardwaremodul sein, das der Steuereinrichtung (57) in geeigneter Weise zugeordnet ist. Das Steuermodul kann auf der Steuerplatine (60) angeordnet sein. Es kann eine eigene Steuerhardware aufweisen oder die platinenseitig vorhandene Hardware, insbesondere die Steuerelektronik (60), nutzen oder erweitern.

Die Hubstützen (4,7) weisen jeweils die besagte Stützeinheit (9) mit dem Aktor (36) auf, der einen Antrieb (40) und eine Steueranordnung (41) beinhaltet. In Abwandlung der gezeigten Ausführungsbeispiele kann eine Hubstütze (4,7) als Schwenkfuß oder Schwenkstütze oder in anderer Weise ausgebildet sein. Durch die getrennt schaltbare Steueranordnung (41) kann mit der hydraulischen Hubstütze der Kraftfluss für die Betätigung des Stützelements (10) eingeschaltet oder ausgeschaltet werden.

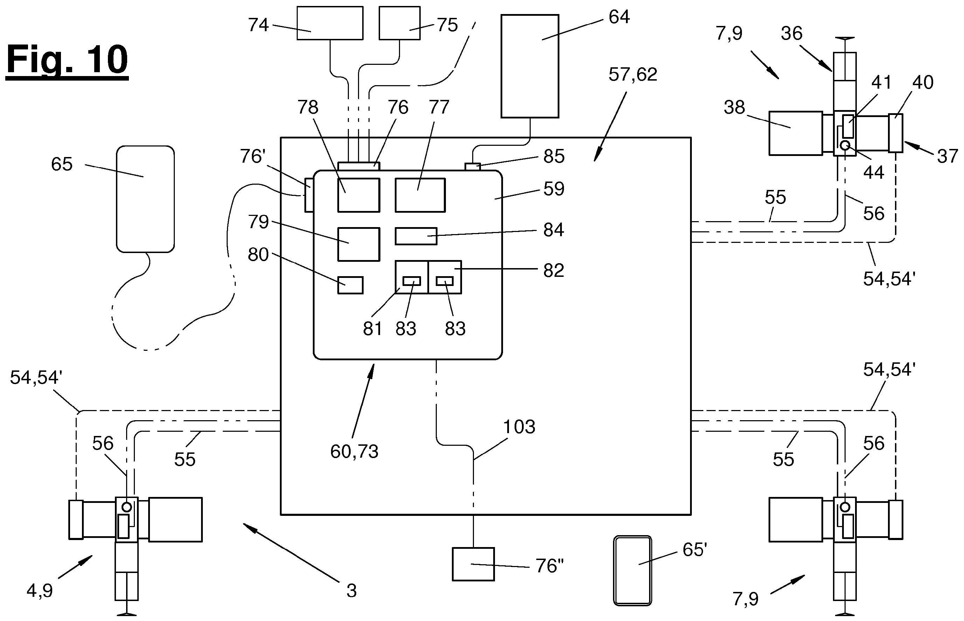

Dies kann ein Sicherheitsaspekt sein, wobei nur bei korrekter Ansteuerung bzw. Beschaltung von Antrieb (40) und Steueranordnung (41) eine Hubstützenbetätigung mit Einfahren und/oder Ausfahren möglich ist. In Figur 10 sind nicht alle Hubstützen (4,7) dargestellt.

Die Sicherungseinrichtung (73) ist mit dem erwähnten Geber (74) für ein Startsignal des Straßenfahrzeugs (1), einer Warneinrichtung (75) und mit dem Bediengerät (65) sowie ggf. mit einer Fahrzeugsteuerung signaltechnisch verbunden.

Die Sicherungseinrichtung (73) weist in der gezeigten Ausführungsform von Figur 10 eine Schnittstelle (76) zur signaltechnischen Verbindung mit dem Geber (74) und mit der Warneinrichtung (75) auf. Ferner ist eine ggf. zusätzliche Schnittstelle (76') für die signaltechnische Verbindung mit einem Bediengerät (65) vorgesehen. Über diese oder eine andere Schnittstelle kann auch eine signaltechnische Verbindung mit einer Fahrzeugsteuerung hergestellt werden. Die signaltechnische Verbindung kann unidirektional oder bidrektional sein. Sie kann leitungsgebunden oder drahtlos sein. Über die signaltechnische Verbindung können Zustands- oder Meldesignale, Steuersignale oder dergleichen übertragen werden.

Die gezeigte Sicherungseinrichtung (73) weist eine Prüfeinrichtung (77) für den aktuellen Betriebszustand des Straßenfahrzeugs (1), ein Weckmodul (78), ein Prüfmodul (79) für die Hubstützenlage, ein Plausibilitätsmodul (80) für Bedienungssignale, mehrere, bevorzugt zwei, Controller (81, 82) mit jeweils einer Controllerüberwachung (83) und ein Nachsetzmodul (84) sowie einen Anschluss (85) für die Energieversorgung (64) auf. Diese Komponenten sind vorzugsweise in vollständiger Kombination vorhanden. Alternativ können eine oder mehrere einzelne Komponenten entfallen, z.B. die Prüfeinrichtung (77) und das Weckmodul (78) .

Das Weckmodul (78) dient zum Aufwecken der Sicherungseinrichtung (73) und ggf. der Steuereinrichtung (57). Das Weckmodul (78) kann durch ein Startsignal des Gebers (74) und/oder ein Bediensignal eines Bediengeräts (65) angesteuert werden.

Die Sicherungseinrichtung (73) und die Steuereinrichtung (57) können grundsätzlich über ein Bediengerät (65) und eine eindeutige Betätigung seines Eingabeelements (66) eingeschaltet und auch ausgeschaltet werden. Wenn im Einschaltzustand längere Zeit kein Bedienungssignal anliegt, kann in den Standby-Modus gewechselt werden, aus dem z.B. ein Aufwecken erfolgt, wenn das besagte Startsignal des Gebers (74) anliegt.

Das Prüfmodul (79) fragt die aktuelle Hubstützenstellung direkt oder über die Programmsteuerung der Steuereinrichtung (57) ab und stellt fest, ob die Hubstützen (4,7) eingefahren oder ausgefahren sind und ob sie ggf. Bodenkontakt haben.

Die Prüfeinrichtung (77) detektiert den Betriebszustand des Straßenfahrzeugs (1). Sie kann bei Anliegen eines Startsignals vom Geber (74) abgefragt werden. Die Prüfeinrichtung (77) ist z.B. per Datenbus mit einer Fahrzeugsteuerung verbunden. Sie kann alternativ oder zusätzlich mit Sensoren im Straßenfahrzeug (1) verbunden sein, die für eine Wegfahrbereitschaft relevante Fahrzeugkomponenten detektieren. Solche Sensoren können z.B. die Handbremsstellung, die Belegung des Fahrersitzes und evtl. weiterer Sitze, die Kupplungsbetätigung, das Einlegen eines Fahrgangs am Fahrzeuggetriebe oder dgl. erfassen.

Das Startsignal wird z.B. in der vorerwähnten Weise beim Einschalten der Zündung des Straßenfahrzeugs (1) emittiert. Über die vorgenannten Sensoren und die Prüfeinrichtung kann detektiert werden, ob beim Einschalten der Zündung der Fahrersitz belegt, die Handbremse gelöst und die Kupplung betätigt bzw. ein Fahrgang eingelegt ist. Wenn diese Kriterien erfüllt sind, ist davon auszugehen, dass mit dem Einschalten der Zündung und dem Starten des Motors auch ein Losfahren des Fahrzeugs beabsichtigt ist. Sind hingegen die Handbremse angezogen, der Fahrersitz nicht belegt und auch kein Fahrgang eingelegt, spricht dies für ein Einschalten der Zündung zu anderen Zwecken und gegen eine Wegfahrabsicht des Bedieners. Andere Kombinationen der Detektionsergebnisse können ebenfalls und mit angepasster Logik bewertet werden.

Die Sicherungseinrichtung (73), insbesondere die Prüfeinrichtung (77), führt anhand einer Auswertung der besagten Bus- oder Sensorsignale eine Bewertung des vom Geber (74) empfangenen Startsignals auf dessen vorhandene (positive) oder fehlende (negative) sicherheitstechnische Relevanz aus.

Wenn die Sicherungseinrichtung (73) über das Prüfmodul (79) eine ausgefahrene Hubstützenstellung erkennt und ein positiv bewertetes Startsignal im Sinne einer detektierten Wegfahrbereitschaft erhält, emittiert sie ein Warnsignal über die Warneinrichtung (75), z.B. einen akkustischen Warnton, einen gesprochenen oder optisch angezeigten Warnhinweis, eine warnende Blinkreaktion oder dgl.

Vorzugsweise belässt die Sicherungseinrichtung (73) dabei die aktuelle ausgefahrene Hubstellung der Hubstützen (4,7) und die angehobene Fahrzeugstellung. Sie verhindert ein automatisches Einfahren der Hubstützen (4,7). Das mit einem Einfahren der Hubstützen (4,7) und einem Absenken des Straßenfahrzeugs (1) verbundene Unfallrisiko wird höher bewertet als eine Beschädigungsgefahr für die Hubstützenanordnung (3) und das Straßenfahrzeug (1), falls der Bediener die Warnung ignoriert und losfährt.

Der eine Controller (81) dient zur Ansteuerung des Antriebs (40) der jeweiligen Hubstütze (4,7). Der andere Controller (82) ist für die Ansteuerung der Steueranordnung (41) der jeweiligen Hubstütze (4,7) vorgesehen. Beide Controller (82) werden hinsichtlich ihrer sicheren Hardwarefunktion mit einer Controllerüberwachung (83) überprüft. Die Controllerüberwachung (83) kann einen elektronischen Watchdog, eine Strommessung, eine Schwingungskontrolle von elektronischen Schaltelementen etc. beinhalten. Der jeweilige Controller (81,82) kann seine Ansteuerfunktion nur ausüben wenn die Controllerüberwachung (83) eine intakte Hardware detektiert. Die Controller (81,82) können eigene elektronische Schaltelemente oder eigene Softwarefunktionen mit Implementierung in einem gemeinsamen Mikrocontroller sein. Dies kann der Mikrocontroller oder Prozessor bzw. Steuerelektronik (60) der Steuerungseinrichtung (57) sein und kann auf der Platine (59) angeordnet sein.

Das Plausibilitätsmodul (80) überprüft die Qualität des Bedienungssignals. Hierbei kann z.B. die Dauer der Betätigung der Bedienelemente überprüft und auf deren beabsichtigte oder zufällige Betätigung oder auch Fehlfunktion rückgeschlossen werden.

Eine sichere Betätigung mit Einfahren und/oder Ausfahren der Hubstützen (4,7) kann erfolgen, wenn kein Startsignal vom Geber (74) empfangen wird, das Bediensignal plausibel ist und die durch die getrennten Controller (81,82) sowie deren Controllerüberwachungen (83) repräsentierten Sicherungskreise in Ordnung sind. Entsprechendes kann bei einem negativ bewerteten Startsignal erfolgen. Das Einfahren der Hubstützen (4,7) kann bevorzugt nur von einem Bediener und nur durch bewusste Betätigung des Bediengeräts (10) veranlasst werden.

Zur Hubstützenbetätigung können dann in der vorbeschriebenen Weise die Antriebe (40) der Pumpen über die Leitung (54) angesteuert und mit Energie versorgt werden sowie die Steueranordnung (41) bzw. Ventilanordnung über die Leitung (55) beaufschlagt und unter Überwindung der Federvorspannung bestromt werden.

Im Falle einer anderen Hubstütze wird der motorische Antrieb (40) über eine Steuerleitung (54') angesteuert. Eine Ansteuerleitung (54') kann auch bei einer zentralen hydraulischen Hubstützenanordnung mit einer zentralen Hydraulikversorgung für die einzelnen Hubstützen benutzt werden.

Das Nachsetzmodul (84) dient zum Nachsetzen mit Kraft- oder Druckbelastung bzw. -einstellung von ein oder mehreren Hubstützen (4,7) nach dem Nivellieren. Die Sicherungseinrichtung (73) detektiert das Funktionsende bzw. Abschalten der Nivelliereinrichtung (62) und führt dann über das Nachsetzmodul (84) eine Überprüfung der verschiedenen Hubstützen (4,7) durch. Hierbei wird z.B. über Abfrage des Sensors (44) festgestellt, ob alle Hubstützen (4,7) ausgefahren sind und Bodenkontakt haben. Ferner wird festgestellt, ob die verschiedenen Hubstützen (4,7) auch eine untereinander gleiche Kraft- oder Druckbelastung haben. Dies kann das Erreichen bzw. Überschreiten eines Mindest-Schwellwerts oder das Erreichen eines oberen Endwerts betreffen. Bei Belastungsunterschieden wird die betreffende und z.B. minderbelastete Hubstütze angesteuert und nachgefahren, bis alle Hubstützen Bodenkontakt haben und auf dem gewünschten Kraft- oder Druckniveau sind.

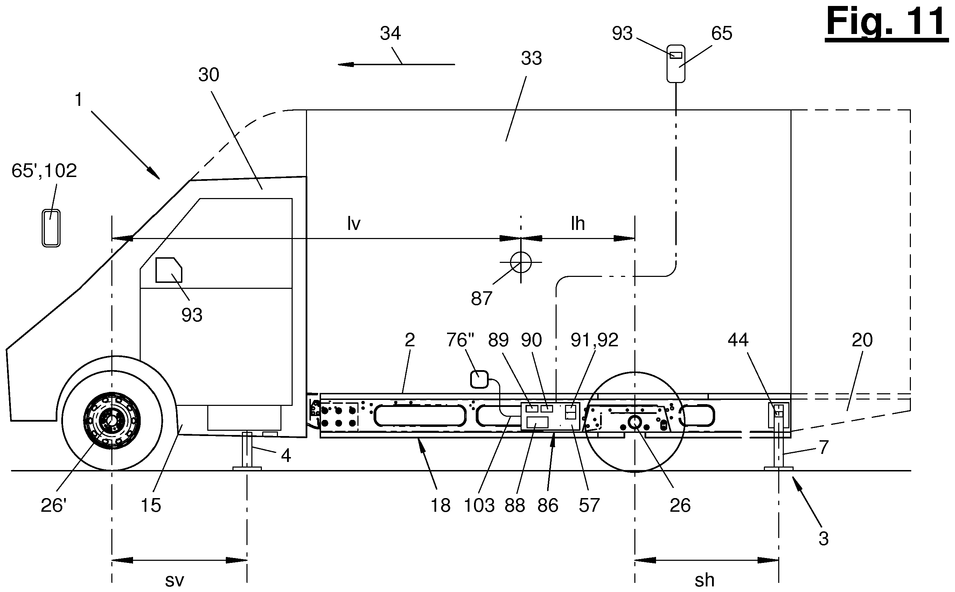

Die als Detektionseinrichtung für Gewichtsmerkmale des Straßenfahrzeugs (1) ausgebildete Sicherungseinrichtung (86) ist in Figur 11 dargestellt.

Die Sicherungseinrichtung (86) weist ein oder mehrere lastaufnehmende Sensoren (44), eine Auswerteeinheit (88), Speicher (89,90) für Daten und Programme, Schnittstellen (91) für Input und Output von Daten, einen Neigungssensor (92) und eine Anzeige (93) für die detektierten Gewichtsmerkmale auf. Den Hubstützen (4,7) ist jeweils mindestens ein lastaufnehmender Sensor (44) zugeordnet.

Dieser erfasst direkt oder mittelbar die auf die jeweilige ausgefahrene und am Untergrund abgestützte Hubstütze einwirkende Belastung aus dem Fahrzeuggewicht bzw. die von der Hubstütze (4,7) entwickelte Stützkraft. Die Belastung bzw. Stützkraft kann direkt als Kraft erfasst werden. Sie kann alternativ mittelbar, als Druck, erfasst und unter Einbeziehung der belastungswirksamen Fläche rechnerisch ermittelt werden.

In Figur 11 ist eine Sicherungseinrichtung (86) bzw. Detektionseinrichtung dargestellt, die eine eigenständige Bau- und Funktionseinheit bildet, welche der Hubstützenanordnung (3) z.B. nachträglich zugeordnet werden kann. In einer anderen Ausführungsform kann die Sicherungseinrichtung (86) bzw. Detektionseinrichtung in eine Hubstützenanordnung (3) implementiert werden und kann deren Hard- und Softwarekomponenten nutzen. Als lastaufnehmender Sensor wird der Drucksensor (44) im Hydraulikkreis der jeweiligen hydraulischen Hubstützen (4,7) und dessen vorhandene Signalverbindung zur Steuereinrichtung (57) genutzt.

Für die Daten- und Programmspeicher (89,90) sowie für die Schnittstellen (91) kann auf die Steuereinrichtung (57) und die Steuerplatine (59) zurückgegriffen werden. Die Anzeige (93) kann am Bediengerät (65) angeordnet sein. Figur 9 zeigt beispielhaft eine solche Ausbildung. Die Anzeige (93) kann alternativ oder zusätzlich am Straßenfahrzeug (1), z.B. an einer Armaturentafel angeordnet sein. Figur 11 verdeutlicht diese Anordnung.

Der Neigungssensor (92) ist fakultativ vorhanden. Er kann auch entfallen. Bei der genannten Implementierung kann für die Ermittlung der Fahrzeugneigung die vorhandene Erfassungseinrichtung (63) der Nivelliereinrichtung (62) genutzt werden.

Die Auswerteeinheit (88) kann in die Steuereinrichtung (57), insbesondere die Steuereinheit (60) als Hardware- und/oder Softwaremodul implementiert werden.

Zur Detektion von ein oder mehren Gewichtsmerkmalen des Straßenfahrzeugs (1) können von der Auswerteeinheit (88) die lastaufnehmenden Sensoren (44) an den ausgefahrenen Hubstützen (4,7) und die dort erfassten Lasten bzw. Stützkräfte abgefragt werden. Die ein oder mehreren relevanten Gewichtsmerkmale sind - die Achslasten der vorderen und hinteren Achsanordnung (26,26') und können zusätzlich auch das Fahrzeuggesamtgewicht und die Lage des Schwerpunkts (87) des Straßenfahrzeugs (1) sein. Hierbei werden die aktuellen und von der Fahrzeugbeladung abhängigen Gewichtsmerkmale detektiert.

Aus einer vorherigen Vermessung, die z.B. bei der Montage der Hubstützenanordnung (3) oder nachträglich durchgeführt wird, sind gemäß Figur 11 der vordere Stützenabstand (sv) zwischen der vorderen Achsanordnung (26') und den beidseitigen vorderen Hubstützen (4) und/oder der hintere Stützenabstand (sh) zwischen dem hinteren Paar von Hubstützen (7) und der hinteren Achsanordnung (26) bekannt. Außerdem ist der Achsabstand zwischen den Achsanordnungen (26,26') bekannt. In Figur 1 ist eine einachsige hintere Achsanordnung (26) dargestellt. Alternativ kann mit entsprechender Abänderung und Anpassung auch eine mehrachsige Achsanordnung (26), z.B. eine Tandemachse oder Trippelachse, vorhanden sein.

Aus den vorhandenen Belastungs- oder Stützkraftdaten der z.B. vier Hubstützen (4,7) kann die räumliche Lage des Schwerpunkts (87) berechnet werden. Dies betrifft insbesondere gemäß Figur 11 den vorderen Schwerpunktabstand (lv) zwischen der vorderen Achsanordnung (26') und dem Schwerpunkt (87) sowie den hinteren Schwerpunktabstand (lh) zwischen der hinteren Achsanordnung (26) und dem Schwerpunkt (87). Die vorderen und hinteren Achslasten können in entsprechender Weise durch Einbeziehung der Stützenabstände (sv,sh) oder eines Stützenabstands (sv,sh) und des Achsabstands berechnet werden.

Wenn ein Neigungssensor (63,92) vorhanden ist, kann auch der Einfluss einer eventuellen Neigung oder Schräglage des Straßenfahrzeugs (1) auf die besagten Gewichtsmerkmale erfasst und berücksichtigt werden.

In einem Datenspeicher (89) kann ein Korrekturwert abgelegt sein, der für die Ermittlung, insbesondere Berechnung, der besagten Gewichtsmerkmale benutzt wird. Der Korrekturwert kann eventuelle systembedingte Abweichungen zwischen den tatsächlichen Belastungen bzw. Stützkräften und den mit den lastaufnehmenden Sensoren (44) ermittelten Lasten bzw. Stützkräften kompensieren. Bei der Montage der Sicherungseinrichtung (86) bzw. Detektionseinrichtung kann eine Kalibrierung durchgeführt werden, aus welcher der Korrekturwert ermittelt wird.

Die Auswerteeinheit (88) übermittelt die ein oder mehreren detektierten Gewichtsmerkmale an die ein oder mehreren Anzeigen (93) und signalisiert sie dort in geeigneter Weise. Dies kann z.B. optisch durch Anzeige von Zahlenwerten oder Wertebereichen erfolgen. Alternativ oder zusätzlich kann mit einer entsprechend ausgebildeten Anzeige (93) ein Warnsignal ausgegeben werden, z.B. wenn ein Gewichtsmerkmal einen Vorgabewert oder Grenzwert überschreitet oder unterschreitet. Dies kann z.B. optisch, akustisch oder haptisch erfolgen.

Außerdem kann die Detektionseinrichtung (86), insbesondere ihre Auswerteeinheit (88), mit der Fahrzeugsteuerung verbunden sein und kann im Gefahrenfall bei einem signifikanten Überschreiten oder Unterschreiten eines vorgegebenen Gewichtsmerkmals, insbesondere einer Achslast, einer Sicherungsmaßnahme am Straßenfahrzeug (1) auslösen. Hierdurch kann z.B. der Motorstart verhindert werden oder die Motordrehzahl bzw. die Fahrzeuggeschwindigkeit begrenzt werden.

Der Fahrzeugbediener kann auf die ein oder mehreren angezeigten Gewichtsmerkmale reagieren, z.B. durch Änderung der Fahrzeugbeladung. Er kann außerdem lastabhängig Einstellungen am Straßenfahrzeug (1) vornehmen, z.B. durch Änderung des Reifendrucks, Veränderung der Federung und/oder Dämpfung an der oder den Achsanordnungen (26,26') oder dgl.

Die Detektion der Gewichtsmerkmale bzw. das Detektionsverfahren können nach Auslösung durch einen Bediener automatisch durchgeführt werden. Die Detektion kann mit Hilfe des Bediengeräts (65,65') und mit Unterstützung durch ein hinterlegtes Programm, insbesondere eine App, durchgeführt werden.

In einem beispielhaften Verfahrensablauf wird die Detektion von einem Bediener durch Eingabe am Bediengerät (65,65') gestartet. Hierbei stellt das Programm bzw. die App fest, ob alle Hubstützen (4,7) eingefahren sind und fährt diese bedarfsweise ein. Anschließend werden die Hubstützen (4,7) bis zum Bodenkontakt ausgefahren. Der Bodenkontakt wird z.B. in der vorbeschriebenen Weise detektiert.

Anschließend können eine oder beide Achsanordnungen (26,26') nacheinander oder gleichzeitig freigehoben werden. Beispielsweise werden zunächst die vorderen Hubstützen (4) ausgefahren. Hierbei wird überprüft, ob eine Hubstütze evtl. ihren Endanschlag erreicht hat, wobei in diesem Fall die Detektionsfunktion abgebrochen und eine entsprechende Meldung an den Bediener übermittelt wird. Ansonsten werden die vorderen Hubstützen (4) solange ausgefahren, bis die vordere Achsanordnung (26') ausgehoben ist und die vorderen Fahrzeugräder vom Boden gelöst sind. Hierbei wird überprüft, ob sich für eine vorgegebene Zeitspanne ein stabiler Kraft- oder Druckwert an den Sensoren (44) einstellt. Sobald dies der Fall ist, wird die Ausfahrbewegung gestoppt. Anschließend werden die hinteren Hubstützen (7) in der vorbeschriebenen Weise ausgefahren bis sich ein stabiler Kraft- oder Druckwert einstellt und die Ausfahrbewegung gestoppt wird.

Das Fahrzeug (1) kann anschließend auf einen Vorgabewert, z.B. eine Horizontallage oder eine Schräglage, durch Betätigung der Hubstützen (4,7) nivelliert werden. Dies kann mittels der vorbeschriebenen Nivelliereinrichtung (62) erfolgen.

Aus der nivellierten Position des Fahrzeugs (1) und der Hubstützen (4,7) kann anschließend ein kurzes Einfahren oder Absenken der Hubstützen (4,7) erfolgen. Dies kann zeit- oder weggesteuert sein. Die Hubstützen (4,7) können dabei gemeinsam oder nacheinander über eine vorgegebene kurze Zeitspanne oder einen vorgegebenen kurzen Weg eingefahren werden. Hierdurch können etwaige Verspannungen gelöst werden. Alternativ oder zusätzlich kann ein solches kurzes Einfahren jeweils nach Einnahme der vorgenannten stabilen Positionen der Hubstützen (4,7) durchgeführt werden.

Der Bediener kann anschließend mittels des Bediengeräts (65,65') zu einer optischen Kontrolle aufgefordert und gefragt werden, ob alle Fahrzeugräder vom Boden gelöst sind. Beantwortet er diese Anfrage negativ, wird der Detektionsvorgang abgebrochen. Andernfalls erfolgt dann die Erfassung bzw. Messung der statischen Kraft- oder Druckwerte an den Sensoren zur Ermittlung der Belastung der einzelnen Hubstützen (4,7). Hieraus werden dann die ein oder mehreren Gewichtsmerkmale berechnet und ggf. an der Anzeige (93, 102) angezeigt. Der Bediener kann dann den Detektionsvorgang durch eine Eingabe beenden. Die Hubstützen (4,7) können bedarfsweise und auf Eingabe dann wieder eingefahren werden.

Der vorbeschriebenen Druck- oder Kraftmessung kann eine Stabilisierungspause vorgeschaltet sein. In dieser wird festgestellt, ob nach dem Nivellieren und kurzen Einfahren der Hubstützen (4,7) eine stabile Fahrzeuglage eintritt. Dies kann über die Kraft- oder Druckwerte und/oder den Neigungssensor (92) festgestellt werden.

Bei einem alternativen Detektionsverfahren kann nach dessen Start zuerst die Nivellierung der Fahrzeuglage mit Bodenhaftung der Fahrzeugräder durchgeführt werden. Anschließend können die Hubstützen (4,7) einzeln oder gemeinsam ausgefahren werden, bis eine Hubstütze (4,7) ihren Endanschlag erreicht hat und die Ausfahrbewegung dann gestoppt wird. Anschließend können die Hubstützen (4,7) in der vorbeschriebenen Weise kurz weg- oder zeitgesteuert einfahren werden. Dies kann in der besagten Weise synchron oder einzeln nacheinander erfolgen. Anschließend wird nach Bedienerkontrolle und Bestätigung des Abhebens aller Fahrzeugräder vom Boden die Erfassung bzw. Messung der Kraft- oder Druckwerte und die Berechnung der ein oder mehreren Gewichtsmerkmale in der vorbeschriebenen Weise durchgeführt.

Eine dritte Verfahrensvariante sieht vor, dass bei Start des Detektionsverfahrens zunächst alle Stützen eingefahren und nach Einnahme der Einfahrposition nacheinander oder gemeinsam über einen vorgebenen Weg oder eine vorgebene Zeitspanne ausgefahren und dann gestoppt werden. Falls eine Hubstütze (4,7) ihren Endanschlag erreicht hat, wird der Detektionsvorgang abgebrochen. Ansonsten werden die Hubstützen (4,7) einzeln nacheinander oder gemeinsam wieder über eine vorgebene Zeitdauer oder einen vorgegebenen Weg ausgefahren und danach wieder in der vorbeschriebenen Weise kurz zeit- oder weggesteuert eingefahren. Nach Bedienerkontrolle und Rückmeldung über ein Lösen der Fahrzeugräder vom Boden wird dann der Erfassungs- und Berechnungsvorgang für die Kraft- oder Druckwerte sowie ein oder mehrere Gewichtsmerkmale in der vorbeschriebenen Weise durchgeführt. Anschließend kann das Detektionsverfahren in der vorgenannten Weise beendet werden.

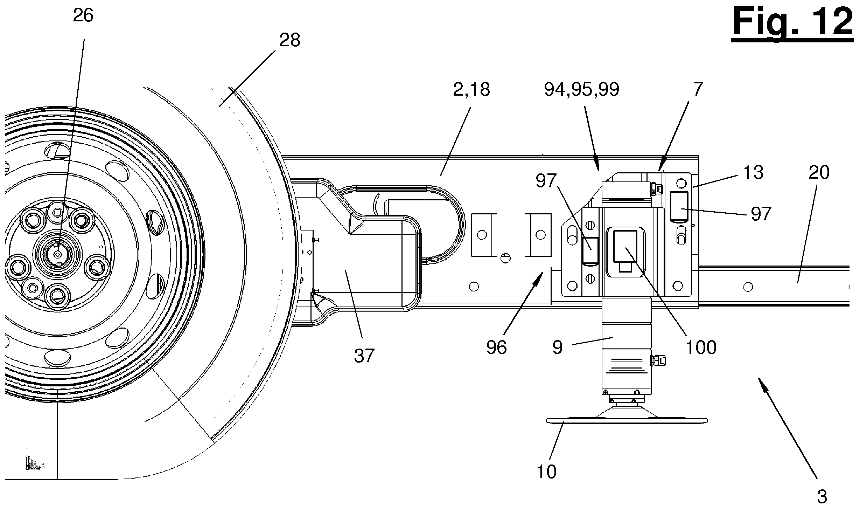

Figur 11 und 12 zeigen eine Sicherungseinrichtung (94), die als Umgebungserfassungseinrichtung ausgebildet ist. Sie kann signaltechnisch mit der Steuereinrichtung (57) der Hubstützenanordnung (3) verbunden sein. Die Umgebungserfassungseinrichtung (94) kann eine oder mehrere Komponenten aufweisen.

In der gezeigten Ausführungsform von Figur 11 und 12 weist die Sicherungseinrichtung, insbesondere Umgebungserfassungseinrichtung (94) eine Beleuchtungseinrichtung (95) und eine optische Erfassungseinrichtung (99) auf. Hierdurch können Umgebung und Funktion der Hubstützen (4,7) und ggf. des Straßenfahrzeugs (1) erfasst werden.

Die Beleuchtungseinrichtung (95) kann mehrere und jeweils den Hubstützen (4,7) zugeordnete Leuchtmittel (96) aufweisen. Diese können an den Hubstützen (4,7) und/oder am Straßenfahrzeug (1), insbesondere am Chassis (2), angeordnet sein. Die Leuchtmittel (96) können jeweils ein oder mehrere Leuchtelemente (97) aufweisen. Die Leuchtelemente können in beliebig geeigneter Weise ausgebildet sein, z.B. als LED-Leuchten. Die Beleuchtungseinrichtung (95) und deren vorgenannte Komponenten sind mit der Steuereinrichtung (57) signaltechnisch verbunden. Für die Energie- oder Stromversorgung können sie ebenfalls mit der Steuereinrichtung (57) oder mit der fahrzeugeigenen Energieversorgung (64) verbunden sein.

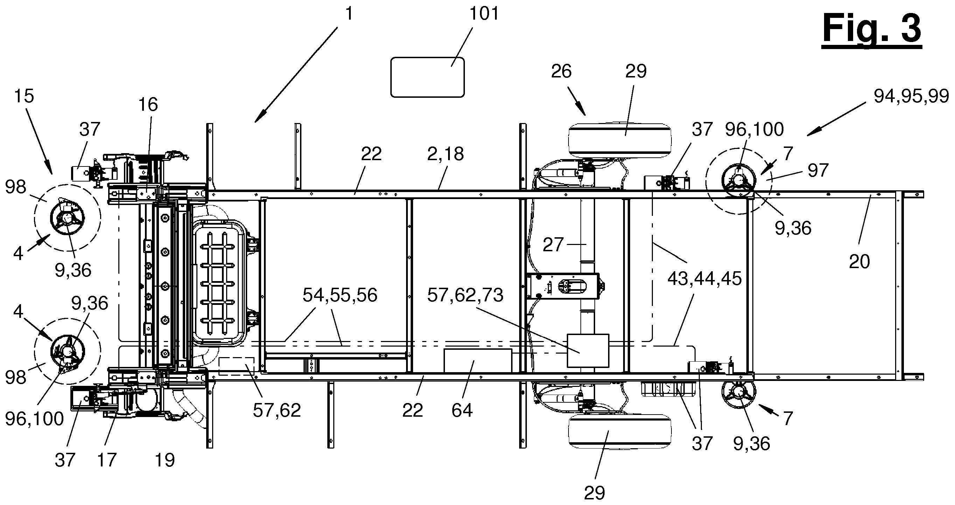

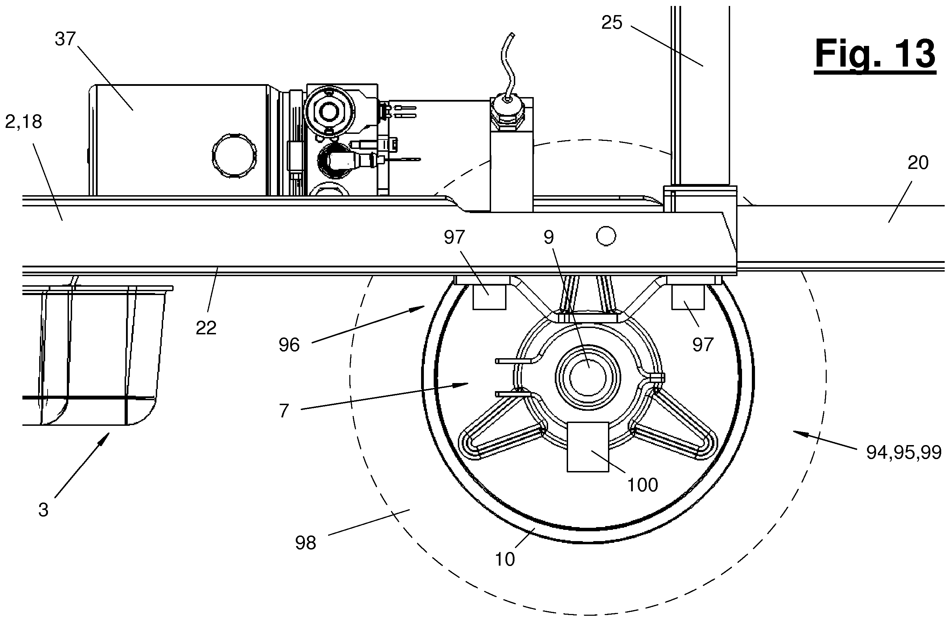

Die Leuchtelemente (97) emittieren Licht nach einer oder mehreren Seiten. Sie können insbesondere Licht nach unten zum Standbereich der ausgefahrenen Hubstütze (4,7) und ihres Stütztellers (10) emittieren. Hierdurch kann im Umfeld des Stütztellers (10) der in Figur 3 und 13 verdeutlichte beleuchtete Bereich (98) am Untergrund und am unteren Hubstützenende gebildet werden. Die Größe und Lage des beleuchteten Bereichs (98) kann durch die Zahl und Anordnung der Leuchtelemente (97) in der gewünschten Weise ausgebildet werden.

Ein Leuchtelement (97) kann Licht auch seitlich emittieren. Dies kann z.B. eine Warn- oder Blinkleuchte sein. Sie kann z.B. von einem eigenständigen Steuermodul der Beleuchtungseinrichtung (95) oder von der Steuereinrichtung (57) bei einer Funktion der Hubstützen (4,7) angeschaltet werden. Sie kann z.B. beim Ein- und Ausfahren einer Hubstütze (4,7) blinken und/oder ein farbiges Warnlicht emittieren. Sie kann auch Quittungs- oder Zustandssignale emittieren. Wenn z.B. die Hubstützenanordnung (3) eine Selbsttest-Routine hat, kann das jeweilige stützenspezifische positive oder negative Testergebnis von einem Leuchtelement (97) signalisiert werden.

Ein Leuchtelement (97) kann außerdem als Bildwerfer oder Projektor fungieren. Es kann z.B. eine bildliche Information, insbesondere ein Logo, per Licht emittieren und auf eine geeignete Fläche, z.B. den Untergrund im Stützenumfeld, projizieren.

Die bevorzugt optische Erfassungseinrichtung (99) kann zum Erfassen des unteren Stützenendes, insbesondere des Bereichs am Stützteller (10), und zur Erfassung des Umfelds der ausgefahrenen und bodenseitig abgestützten Hubstütze (4,7) dienen. Die optische Erfassungseinrichtung (99), kann eine oder mehrere elektronische Kameras (100), insbesondere Digitalkameras, aufweisen.

Die optische Erfassungseinrichtung (99) kann der Hubstützenanordnung (3) in geeigneter Weise zugeordnet sein. Die Kameras (100) können z.B. jeweils einer Hubstütze (4,7) zugeordnet sein. Sie können dort oder am Straßenfahrzeug (1), insbesondere am Chassis (2,18), montiert sein. An einer Hubstütze (4,7), z.B. an deren Stützeinheit (8), oder in deren Umgebung können eine oder mehrere Kameras (100) montiert sein.

Die ein oder mehreren Kameras (100) können eine Blickrichtung nach unten zum unteren Hubstützenbereich und zum Untergrund aufweisen. Sie können zusätzlich eine seitliche Blickrichtung haben. Die ein oder mehreren Kameras (100) können ein dementsprechend großes, z.B. halbkugelförmiges Blickfeld haben.

Die Kamera (100) kann der reinen Bildaufnahme dienen. Es ist auch eine Ausbildung als Messkamera möglich, mit der z.B. Entfernungen zum Untergrund, insbesondere auch Schräglagen, messtechnisch aufgenommen werden können. Ferner können aufgenommenen Bildelemente ausgewertet und vermessen werden. Hierüber kann z.B. festgestellt werden, ob der Stützteller (10) mit einer ausreichenden Aufstandsfläche am Untergrund abgestützt ist oder nicht. Ferner kann festgestellt werden, ob eine Hubstütze (4,7) in ungünstiger Weise gegenüber dem Untergrund positioniert ist, z..B. über einer bodenseitigen Vertiefung. Auch die Tragfähigkeit des Untergrunds kann optisch beurteilt werden. Die Bild- und Informationsauswertung kann durch den Bediener mittels der Anzeige (100) durchgeführt werden. Sie kann alternativ oder zusätzlich automatisch durch eine Bildauswertesoftware erfolgen. Hierbei kann das Auswerteergebnis, z.B. eine mangelhafte Untergrundabstützung, dem Bediener als Warnhinweis oder in anderer Weise signalisiert werden.

Die optische Erfassungseinrichtung (99) kann mit der Beleuchtungseinrichtung (95) und deren Komponenten zusammenwirken. Hierdurch kann bei fehlenden oder ungünstigem Umgebungslicht der Sichtbereich der optischen Erfassungseinrichtung (99) ausgeleuchtet werden.

Die optische Erfassungseinrichtung (99), insbesondere ihre Kamera(s) (100), kann einzelne Bilder und/oder einen Film aufnehmen. Sie kann mit einer Auswerteeinrichtung, insbesondere einer Bildauswertung, versehen sein oder kann mit einer solchen gekoppelt sein. Hierfür kann die optische Erfassungseinrichtung (99) ein eigenes Auswertemodul aufweisen oder kann mit der Steuereinrichtung (57) verbunden sein, wobei dort eine entsprechende Bildauswertesoftware implementiert ist.

Die optische Erfassungseinrichtung (99) kann mit einer in Figur 3 schematisch angedeuteten Anzeige (101) für die aufgenommen Bilder bzw. Videos und ggf. für weitere Informationen verbunden sein oder eine solche Anzeige aufweisen. Die Anzeige (101) kann z.B. ein Monitor sein. Die Anzeige (101) kann am Straßenfahrzeug (1), insbesondere an einer Armaturentafel, und/oder an einem Bediengerät (65) angeordnet sein. Figur 9 zeigt eine solche Ausführung.

Die Erfassungseinrichtung (99) kann alternativ in anderer Weise ausgebildet und angeordnet sein. Die Umgebungsserfassung kann auf andere Weise als optisch erfolgen.

Die Sicherungseinrichtung (94), insbesondere Umgebungserfassungseinrichtung, kann ebenfalls eine eigenständige Bau- und Funktionseinheit mit den vorgenannten Hard- und Softwarekomponenten sein. Diese kann einer vorhandenen Hubstützenanordnung (3) zugeordnet werden. Analog zur Detektionseinrichtung (86) kann auch die Umgebungserfassungseinrichtung (94) teilweise in eine Hubstützenanordnung (3) implementiert sein. Dies kann insbesondere die Steuerungs- und Software-Komponenten, die Stromversorgung etc. betreffen.

### BEZUGSZEICHENLISTE

- 1: Fahrzeug, Straßenfahrzeug
- 2: Fahrgestell, Chassis
- 3: Hubstützenanordnung
- 4: Hubstütze an Fahrerkabine
- 5:
- 6:
- 7: Hubstütze an Heckbereich
- 8:
- 9: Stützeinheit
- 10: Stützteller
- 11:
- 12: Träger
- 13: Anbaubeschlag
- 14:
- 15: Zugkopf
- 16: Fahrgestellteil vorn, Zugkopfchassis
- 17: Unterzug
- 18: Anbauchassis
- 19: Adapter
- 20: Fahrgestellteil hinten, Heckteil, Heckverlängerung
- 21:
- 22: Fahrgestellteil, Längsträger
- 23: Trägersteg
- 24: Stegöffnung
- 25: Querträger
- 26: Achsanordnung hinten, Radlenkerachse
- 26': Achsanordnung vorn, Vorderachse
- 27: Achskörper, Achsrohr
- 28: Fahrgestellteil, Achsbock
- 29: Rad
- 30: Fahrerkabine
- 31: Einstiegstelle, Stufe
- 32: Verbindungsstelle
- 33: Aufbau
- 34: Fahrtrichtung, Fahrzeuglängsachse
- 35: Wagenheberaufnahme
- 36: Aktor, teleskopierbarer Zylinder
- 37: Versorgungseinheit
- 38: Tank für Hydraulikflüssigkeit
- 39: Pumpenanordnung
- 40: Pumpenantrieb, Motor
- 41: Steueranordnung, Ventilanordnung
- 42: Gehäuse
- 43: Längsachse
- 44: Sensor, Drucksensor
- 45: Leitungsanschluss, Auslass
- 46: Leitungsanschluss, Einlass
- 47: Ablass
- 48: Kolbenstange
- 49: Außenrohr
- 50: Innenrohr
- 51: Aktoraufnahme, Klemmschale
- 52: Montagekonsole
- 53: Leitung für Hydraulikflüssigkeit
- 54: Leitung, Energieversorgung
- 54': Leitung, Steuerleitung zu Stützenantrieb
- 55: Leitung, Steuerleitung zu Steueranordnung
- 56: Leitung, Signalleitung
- 57: Steuereinrichtung
- 58: Gehäuse
- 59: Steuerplatine
- 60: Steuereinheit, Steuerelektronik
- 61: Endstufe
- 62: Nivelliereinrichtung
- 63: Erfassungseinrichtung für Neigung
- 64: Energieversorgung, Akku
- 65: Bediengerät, Fernbedienung
- 65': Kommunikationsgerät, Smartphone, Tablet
- 66: Eingabeelement, Ein/Aus, Nothalt
- 67: Eingabeelement für manuelle Bedienung
- 68: Eingabeelement für automatische Nivellierung
- 69: Eingabeelement für Stützenbetätigung
- 70: Eingabeelement für Sonderposition
- 71: Eingabeelement für Sonderposition
- 72: Anzeigeelement
- 72': Anzeigeelement
- 73: Sicherungseinrichtung, Fahrkontrolle
- 74: Geber für Startsignal Fahrzeug
- 75: Warneinrichtung
- 76: Schnittstelle zu Fahrzeug
- 76': Schnittstelle zu Bediengerät
- 76": Kommunikationseinheit extern, Kommunikationsbox
- 77: Prüfeinrichtung für Fahrzeugzustand
- 78: Weckmodul
- 79: Prüfmodul Hubstützenlage
- 80: Plausibilitätsmodul
- 81: Controller Antrieb
- 82: Controller Steueranordnung
- 83: Controllerüberwachung
- 84: Nachsetzmodul
- 85: Anschluss Energieversorgung
- 86: Sicherungseinrichtung, Detektionseinrichtung
- 87: Schwerpunkt
- 88: Auswerteeinheit, Recheneinheit
- 89: Speicher, Datenspeicher
- 90: Speicher, Programmspeicher
- 91: Schnittstelle für Input/Output
- 92: Neigungssensor
- 93: Anzeige für Gewichtsmerkmal
- 94: Sicherungseinrichtung, Umgebungserfassungseinrichtung
- 95: Beleuchtungseinrichtung
- 96: Leuchtmittel
- 97: Leuchtelement, LED
- 98: beleuchteter Bereich
- 99: optische Erfassungseinrichtung, Kamera
- 100: Kamera
- 101: Anzeige
- 102: Bildschirm, Touchscreen
- 103: Bus, CAN-Bus

- lv: Schwerpunktabstand vorn
- lh: Schwerpunktabstand hinten
- sv: Stützenabstand vorn
- sh: Stützenabstand hinten

## Patentansprüche

1. Hubstützenanordnung für ein motorisiertes Straßenfahrzeug (1) mit einem Fahrgestell (2), nämlich für Wohnmobile, und einer vorderen und hinteren Achsanordnung (26,26'), wobei die Hubstützenanordnung (3) mehrere, insbesondere vier, Hubstützen (4,7) mit einer Steuereinrichtung (57) aufweist, **dadurch gekennzeichnet, dass** die Hubstützenanordnung (3) eine Sicherungseinrichtung (73,86,94) für die Hubstützenanordnung (3) und/oder das Straßenfahrzeug (1) aufweist, wobei die Sicherungseinrichtung (86) eine Detektionseinrichtung für Gewichtsmerkmale des Straßenfahrzeugs (1), nämlich für die vorderen und hinteren Achslasten, aufweist,
wobei die Detektionseinrichtung (86) mit Sensoren (44) verbunden ist oder Sensoren (44) aufweist, welche die aktuelle Belastung, insbesondere die Stützkraft, der einzelnen ausgefahrenen und bodenseitig abgestützten Hubstützen (4,7) direkt oder mittelbar aufnehmen,
wobei die Sensoren Drucksensoren im Hydraulikkreis von hydraulischen Hubstützen sind.

2. Hubstützenanordnung nach Anspruch 1, **dadurch gekennzeichnet, dass** die Hubstützenanordnung (3) als dezentrale Hubstützenanordnung mit autonomen, insbesondere hydraulischen oder motorischen, Hubstützen (4,7) ausgebildet ist.

3. Hubstützenanordnung nach Anspruch 1, **dadurch gekennzeichnet, dass** die Detektionseinrichtung (86) eine Auswerteeinheit (88) aufweist, die aus der aufgenommenen Belastung, insbesondere Stützkraft, der einzelnen Hubstützen (4,7) die Lage des Schwerpunkts (87) des Straßenfahrzeugs (1) und/oder die Achslasten der vorderen und hinteren Achsanordnung (26,26') ermittelt.

4. Hubstützenanordnung nach einem der Ansprüche 1 bis 3, **dadurch gekennzeichnet, dass** die Detektionseinrichtung (86) Schnittstellen (91) für Input/Output und Speicher (89,90) für Programme sowie für Daten, insbesondere den vorderen und/oder hinteren Stützenabstand (sv,hv) zur benachbarten Achsanordnung (26,26') und/oder den Achsabstand und einen evtl. Korrekturfaktor, aufweist.

5. Hubstützenanordnung nach einem der Ansprüche 1 bis 4, **dadurch gekennzeichnet, dass** die Detektionseinrichtung (86) einen Neigungssensor (92) aufweist oder mit einer Neigungserfassungseinrichtung (63) verbunden ist.

6. Hubstützenanordnung nach einem der Ansprüche 1 bis 5, **dadurch gekennzeichnet, dass** die Detektionseinrichtung (86) in die Hubstützenanordnung (3) integriert ist, wobei insbesondere eine Auswerteeinheit (88) in der Steuereinrichtung (57) als Software-und/oder Hardwaremodul implementiert ist.

7. Hubstützenanordnung nach einem der vorhergehenden Ansprüche, **dadurch gekennzeichnet, dass** die Hubstützen (4,7) eine ausfahrbare und zur eigenen Abstützung an einem Untergrund ausgebildete Stützeinheit (9) mit einem Aktor (36) aufweist, wobei der Aktor (36) einen Antrieb (40) und eine Steueranordnung (41) beinhaltet.

8. Hubstützenanordnung nach einem der vorhergehenden Ansprüche, **dadurch gekennzeichnet, dass** die Hubstützenanordnung (3) eine Nivelliereinrichtung (62) aufweist, wobei die Sicherungseinrichtung (73) ein Nachsetzmodul (84) für das Nachsetzen mit Bodenkontakt und mit Kraft- oder Druckbelastung von ein oder mehreren Hubstütze(n) (4,7) nach dem Nivellieren aufweist.

## Claims

1. Lifting support assembly for a motorized road vehicle (1) having a chassis (2), in particular for mobile homes, and a front and rear axle assembly (26, 26'), wherein the lifting support assembly (3) has a plurality of, in particular four, lifting supports (4, 7) with a control device (57), **characterized in that** the lifting support assembly (3) has a safety device (73, 86, 94) for the lifting support assembly (3) and/or the road vehicle (1), wherein the safety device (86) has a detection device for weight features of the road vehicle (1), in particular for the front and rear axle loads,
wherein the detection device (86) is connected to sensors (44) or has sensors (44) which directly or indirectly sense the current load, in particular the supporting force, of the individual extended lifting supports (4, 7) which are supported on the ground,
wherein the sensors are pressure sensors in the hydraulic circuit of hydraulic lifting supports.

2. Lifting support assembly according to Claim 1, **characterized in that** the lifting support assembly (3) is embodied as a decentralized lifting support assembly with autonomic, in particular hydraulic or motor-operated, lifting supports (4, 7).

3. Lifting support assembly according to Claim 1, **characterized in that** the detection device (86) has an evaluation unit (88) which determines the position of the centre of gravity (87) of the road vehicle (1) and/or the axle loads of the front and rear axle assemblies (26, 26') from the sensed load, in particular supporting force, of the individual lifting supports (4, 7).

4. Lifting support assembly according to one of Claims 1 to 3, **characterized in that** the detection device (86) has interfaces (91) for input/output and memory (89, 90) for programs as well as for data, in particular the front and/or rear support distances (sv, hv) from the adjacent axle assembly (26, 26') and/or the wheelbase and a possible correction factor.

5. Lifting support assembly according to one of Claims 1 to 4, **characterized in that** the detection device (86) has an inclination sensor (92) or is connected to an inclination-sensing device (63).

6. Lifting support assembly according to one of Claims 1 to 5, **characterized in that** the detection device (86) is integrated into the lifting support assembly (3), wherein in particular an evaluation unit (88) is implemented as a software module and/or hardware module in the control device (57).

7. Lifting support assembly according to one of the preceding claims, **characterized in that** the lifting supports (4, 7) have an extendable support unit (9) which is designed to support itself on an underlying surface and has an actuator (36), wherein the actuator (36) contains a drive (40) and a control assembly (41).

8. Lifting support assembly according to one of the preceding claims, **characterized in that** the lifting support assembly (3) has a levelling device (62), wherein the safety device (73) has a resetting module (84) for resetting with ground contact and with force loading or pressure loading of one or more lifting supports (4, 7) after the levelling process.

## Revendications

1. Agencement de vérins pour un véhicule routier motorisé (1) comprenant un châssis (2), notamment pour camping-car, et un agencement d'essieux avant et arrière (26, 26'), l'agencement de vérins (3) comprenant plusieurs, notamment quatre, vérins (4, 7) avec un dispositif de contrôle (57), **caractérisé en ce que** l'agencement de vérins (3) comprend un dispositif de sécurité (73, 86, 94) pour l'agencement de vérins (3) et/ou le véhicule routier (1), le dispositif de sécurité (86) comprenant un dispositif de détection pour des caractéristiques de poids du véhicule routier (1), notamment pour les charges par essieu avant et arrière,
le dispositif de détection (86) étant relié à des capteurs (44) ou comprenant des capteurs (44), qui enregistrent directement ou indirectement la charge actuelle, notamment la force de soutien, des vérins individuels (4, 7) sortis et soutenus du côté du sol,
les capteurs étant des capteurs de pression dans le circuit hydraulique de vérins hydrauliques.

2. Agencement de vérins selon la revendication 1, **caractérisé en ce que** l'agencement de vérins (3) est configuré sous la forme d'un agencement de vérins décentralisé avec des vérins autonomes, notamment hydrauliques ou motorisés (4, 7).

3. Agencement de vérins selon la revendication 1, **caractérisé en ce que** le dispositif de détection (86) comprend une unité d'évaluation (88), qui détermine à partir de la charge enregistrée, notamment de la force de soutien, des vérins individuels (4, 7) la position du centre de gravité (87) du véhicule routier (1) et/ou les charges par essieu de l'agencement d'essieux avant et arrière (26, 26').

4. Agencement de vérins selon l'une quelconque des revendications 1 à 3, **caractérisé en ce que** le dispositif de détection (86) comprend des jonctions (91) pour l'entrée/la sortie et une mémoire (89, 90) pour des programmes, ainsi que pour des données, notamment l'écart des vérins avant et/ou arrière (sv, hv) avec l'agencement d'essieux voisin (26, 26') et/ou l'écart des essieux et un facteur de correction éventuel.

5. Agencement de vérins selon l'une quelconque des revendications 1 à 4, **caractérisé en ce que** le dispositif de détection (86) comprend un capteur d'inclinaison (92) ou est relié avec un dispositif de détection d'inclinaison (63).

6. Agencement de vérins selon l'une quelconque des revendications 1 à 5, **caractérisé en ce que** le dispositif de détection (86) est intégré dans l'agencement de vérins (3), une unité d'évaluation (88) étant notamment mise en œuvre dans le dispositif de contrôle (57) sous la forme d'un module logiciel et/ou matériel.

7. Agencement de vérins selon l'une des revendications précédentes, **caractérisé en ce que** les vérins (4, 7) comprennent une unité de soutien (9) pouvant être sortie et configurée pour le soutien propre sur un substrat, avec un actionneur (36), l'actionneur (36) contenant un entraînement (40) et un agencement de contrôle (41).

8. Agencement de vérins selon l'une quelconque des revendications précédentes, **caractérisé en ce que** l'agencement de vérins (3) comprend un dispositif de nivellement (62), le dispositif de sécurité (73) comprenant un module de repositionnement (84) pour le repositionnement avec contact avec le sol et avec charge de force ou de pression par un ou plusieurs vérins (4, 7) après le nivellement.
